(19) Europäisches Patentamt
European Patent Office
Office européen des brevets

(11) **EP 3 368 297 B1**

(12) **EUROPÄISCHE PATENTSCHRIFT**

(45) Veröffentlichungstag und Bekanntmachung des Hinweises auf die Patenterteilung:
**17.07.2019  Patentblatt 2019/29**

(21) Anmeldenummer: **16785162.5**

(22) Anmeldetag: **21.10.2016**

(51) Int Cl.:
*B32B 5/12* (2006.01)          *B32B 5/28* (2006.01)
*B32B 7/00* (2019.01)          *B32B 27/36* (2006.01)
*C08J 5/04* (2006.01)

(86) Internationale Anmeldenummer:
**PCT/EP2016/075462**

(87) Internationale Veröffentlichungsnummer:
**WO 2017/072054 (04.05.2017 Gazette 2017/18)**

(54) **MEHRSCHICHTIGER FASERVERBUNDWERKSTOFF**

MULTILAYER FIBER COMPOSITE MATERIAL

MATIERE EN FIBRES COMPOSITES MULTICOUCHE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.10.2015  EP 15191420**

(43) Veröffentlichungstag der Anmeldung:
**05.09.2018  Patentblatt 2018/36**

(73) Patentinhaber: **Covestro Deutschland AG**
**51373 Leverkusen (DE)**

(72) Erfinder:
• **GROSSER, Ulrich**
  **51515 Kürten (DE)**

• **GRIMM, Thomas**
  **50765 Köln (DE)**
• **KUHLMANN, Timo**
  **42799 Leichlingen (DE)**

(74) Vertreter: **Levpat**
**c/o Covestro AG**
**Gebäude 4825**
**51365 Leverkusen (DE)**

(56) Entgegenhaltungen:
**WO-A1-2014/014813**

**Beschreibung**

Die vorliegende Erfindung betrifft einen Mehrschichtverbundwerkstoff, ein Verfahren zu dessen Herstellung sowie ein Gehäuseteil für ein Gehäuse eines elektronischen Geräts, umfassend einen solchen Mehrschichtverbundwerkstoff.

WO 2014/014813 A1 offenbart einen thermoplastischen Verbundartikel umfassend eine faserverstärkte thermoplastische Polymer-Kernschicht umfassend Verstärkungsfasern und ein thermoplastisches Harz mit einem Schmelzflussindex von mehr als 325 g/10 Minuten gemäß ASTM D1238, Bedingung L.

In den letzten Jahren besteht insbesondere auf dem Gebiet der transportablen elektronischen Geräte, wie beispielsweise Mobiltelefone, Laptops oder Tablets, der Trend, immer leichtere und dünnere Geräte herzustellen. Dies erfordert unter anderem die Entwicklung von extrem leichten und dünnen Gehäusen, die gleichzeitig eine hohe mechanische Stabilität aufweisen müssen, um Bildschirm und Elektronik des Geräts zu schützen. Als Stand der Technik für solche Zwecke haben sich mittlerweile z.B. Magnesium-Aluminium-Legierungen etabliert. Vorteilhaft an Gehäusen aus Metalllegierungen sind ihr leichtes Gewicht und ihre hohe mechanische Stabilität. Darüber hinaus werden derartige Metallgehäuse vom Verbraucher auch als ästhetisch ansprechend und hochwertig empfunden. Gehäuse aus herkömmlichem Plastik werden vom Verbraucher dahingegen als eher minderwertig empfunden und können auch im Hinblick auf die mechanischen Eigenschaften nicht mit den Metalllegierungen konkurrieren. Letztere haben allerdings den gravierenden Nachteil, dass sie aus kostenintensiven Rohstoffen in aufwendigen und energieintensiven Verfahren hergestellt werden müssen, was mit hohen Herstellungskosten verbunden ist.

Eine vielversprechende Alternative zu Metallgehäusen sind Gehäuse aus Mehrschichtverbundwerkstoffen. Solche Mehrschichtverbundwerkstoffe, die aus mehreren Faserverbundwerkstofflagen aufgebaut sind, die mit einem Kunststoff imprägnierte unidirektional ausgerichtete Endlosfasern enthalten, lassen sich nicht nur kostengünstiger herstellen, sondern sind auch leichtgewichtig und können durch geeignete Ausgestaltung ähnliche mechanische Eigenschaften wie die Gehäuse aus Metalllegierungen aufweisen. Nachteilig an den Mehrschichtverbundwerkstoffen ist allerdings, dass ihre Oberflächen häufig Störstellen aufweisen. Solche Störstellen werden vermutlich u.a. durch nicht mit dem Kunststoff benetzte, aus der Oberfläche herausragende trockene Endlosfasern und Lufteinschlüsse verursacht. Diese Störstellen sind optisch an den Oberflächen wahrnehmbar und für den Verbraucher ästhetisch daher nicht ansprechend. Problematisch an diesen Störstellen ist ferner, dass sie die Lackierbarkeit der Oberfläche beeinträchtigen. Insbesondere wird die Ausbildung einer gleichförmigen Schichtdicke der Lackierung gestört, so dass die lackierten Mehrschichtverbundwerkstoffe kein einheitliches Eigenschaftsprofil aufweisen. Die Störstellen können sich ferner auch nachteilig auf die mechanischen Eigenschaften des Mehrschichtverbundwerkstoffs auswirken.

Ausgehend von dem voranstehend erläuterten Stand der Technik bestand eine Aufgabe der vorliegenden Erfindung darin, einen Mehrschichtverbundwerkstoff bereit zu stellen, der eine ästhetisch ansprechende, im Wesentliche störstellenfreie Oberfläche aufweist und gleichzeitig gute mechanische Eigenschaften beibehält, um als Gehäuseteilmaterial für ein Gehäuse eines elektronischen Geräts geeignet zu sein. Hierfür sollte der Mehrschichtverbundwerkstoff darüber hinaus über metallähnliche mechanische Eigenschaften verfügen.

Diese Aufgabe wird erfindungsgemäß durch einen Mehrschichtverbundwerkstoff gelöst, der mindestens drei übereinander liegende Lagen Faserverbundwerkstoff umfasst, die relativ zueinander definiert werden als zwei außenliegende Lagen Faserverbundwerkstoff und mindestens eine innenliegende Lage Faserverbundwerkstoff, wobei

(a) jede dieser mindestens drei Lagen Faserverbundwerkstoff, Endlosfasern enthält, wobei

- die Endlosfasern innerhalb der jeweiligen Lage unidirektional ausgerichtet sind und

- in einem auf Polycarbonat basierenden Kunststoff eingebettet sind, wobei das Polycarbonat ausgewählt ist aus Homopolycarbonat oder Copolycarbonat,

(b) die innenliegenden Lagen Faserverbundwerkstoff im Wesentlichen gleich orientiert sind und ihre Orientierung relativ zu den außenliegenden Lagen Faserverbundwerkstoff um 30° bis 90° rotiert ist, wobei die Orientierung einer Lage Faserverbundwerkstoff durch die Orientierung der darin enthaltenen, unidirektional ausgerichteten Fasern bestimmt wird.

(c) wobei die außenliegenden Lagen Faserverbundwerkstoff einen geringeren Volumengehalt an Fasern, bezogen auf das Gesamtvolumen der Lage Faserverbundwerkstoff, aufweisen als die mindestens eine innenliegende Lage Faserverbundwerkstoff.

Es wurde überraschenderweise gefunden, dass die Kombination der Merkmale des unabhängigen Patentanspruchs 1 zu einem Mehrschichtverbundwerkstoff führt, der durch eine im Wesentlichen störstellenfreie Oberfläche gekennzeichnet ist und trotz des geringeren Faservolumengehalts in den außenliegenden Faserverbundwerkstofflagen, gute mechanische Eigenschaften aufweist. Zudem zeichnen sich die erfindungsgemäßen Mehrschichtverbundwerkstoffe durch eine gute Lackierbarkeit und Hinterspritzbarkeit aus. Vorteilhaft an den erfindungsgemäßen Mehrschichtverbundwerkstoffen ist ferner, dass die Gestaltung, beispielsweise eines Gehäuseteils, durch die Thermoformierbarkeit der Mehrschichtverbundwerkstoffe besonders einfach und flexibel erfolgen kann.

Gegenstand der Erfindung ist ferner ein Verfahren zur Herstellung des erfindungsgemäßen Mehrschichtverbundwerkstoffs sowie ein Gehäuseteil, welches geeignet ist für die Verwendung oder den Einsatz in einem Gehäuse eines elektronischen Geräts, unter Verwendung des Mehrschichtverbundwerkstoffs.

Faserverbundwerkstoffe finden im Stand der Technik überwiegend als Leichtbaumaterialien, beispielsweise im Fahrzeugbau, Schiffbau, Flugzeugbau, Sportbereich und in der Bauindustrie Anwendung. Kunststoff-basierte Faserverbundwerkstoffe weisen als Hauptkomponenten meist einen faserförmigen Füllstoff auf, der in eine Kunststoffmatrix eingebettet ist.

Im Stand der Technik werden als Kunststoffmatrixmaterialien für Faserverbundwerkstoffe vor allem thermisch härtende duroplastische Kunststoffe, wie Harnstoff-Formaldehyd-Harze oder Epoxidharze, oder thermoplastische Kunststoffe, wie Polyamide, Polypropylen oder Polyethylen, eingesetzt.

Im Gegensatz hierzu sind Polycarbonate als Kunststoffmatrixmaterialien für Faserverbundwerkstoffe bislang nicht besonders in Erscheinung getreten. Polycarbonate haben gegenüber den üblicherweise eingesetzten thermoplastischen Kunststoffen den Nachteil, dass sie wenig Veranlagung zum Kriechen aufweisen und somit bei konstanter Spannung zu Rissbildung neigen. Dies ist besonders beim Einsatz in Faserverbundwerkstoffen, die Endlosfasern enthalten, höchst problematisch. Denn Faserverbundwerkstoffe, die in ihrer Kunststoffmatrix Endlosfasern enthalten, stehen durch die Endlosfasern unter einer konstanten Spannung. Aus diesem Grund spielten Polycarbonate in der Praxis als Kunststoffmatrix für solche Endlosfasern enthaltenden Faserverbundwerkstoffe bisher nur eine untergeordnete Rolle. Grundsätzlich wäre es jedoch wünschenswert, das Einsatzgebiet von Polycarbonaten auch auf Kompositmaterialien auszuweiten, denn Polycarbonate weisen gegenüber den anderen üblichen thermoplastischen Kunststoffen, wie Polyamid oder Polypropylen, einen geringeren Volumenschwund beim Aushärten auf. Ferner weisen Polycarbonate höhere Wärmeformbeständigkeiten auf. Es wurde überraschenderweise gefunden, dass gerade die Verwendung eines auf Polycarbonat basierenden Kunststoffs als Kunststoffmatrix für Endlosfasern in Kombination mit den weiteren Merkmalen des unabhängigen Patentanspruchs 1 zu einem erfindungsgemäßen Mehrschichtverbundwerkstoff führt, der eine besonders ausgeprägte metallische Haptik und Optik aufweist.

Aus dem Stand der Technik sind zahlreiche Faserverbundwerkstoffe und Verfahren zu deren Herstellung bekannt. WO 2013/098224 A1 beschreibt ein Verfahren zur Herstellung eines Faserverbundwerkstoffs in Form eines kunststoffimprägnierten Breitfaserbandes und eine aus Abschnitten des Breitfaserbandes erhältliche Mehrschichtverbundstruktur. Als Kunststoffmatrix können sowohl duroplastische als auch thermoplastische Kunststoffe verwendet werden. DE 10 2012 200 059 A1 beschreibt einen faserverstärkten Mehrschichtverbundwerkstoff dessen Kunststoffmatrix ein thermoplastischer Kunststoff ist. Allerdings sind die aus dem Stand der Technik bekannten Mehrschichtverbundwerkstoffe hinsichtlich ihrer optischen, klanglichen, haptischen und mechanischen Eigenschaften stark verbesserungswürdig, wenn es darum geht, sich den Eigenschaften von Gehäusen aus Metalllegierungen weiter anzunähern.

Im Rahmen der vorliegenden Erfindung werden als Werkstoffe fertige Kunststoffprodukte verstanden, die bereits vernetzt und bei Raumtemperatur nicht mehr fließfähig sind.

Der Begriff "Endlosfaser" ist im Sinne der Erfindung als Abgrenzung zu den dem Fachmann ebenfalls bekannten Kurz- oder Langfasern zu verstehen. Endlosfasern erstrecken sich in der Regel über die gesamte Länge der Lage Faserverbundwerkstoff. Der Begriff Endlosfaser leitet sich davon ab, dass diese Fasern auf einer Rolle aufgewickelt vorliegen und während der Herstellung der einzelnen Faserverbundwerkstofflagen abgewickelt und mit Kunststoff imprägniert werden, so dass, mit Ausnahme von gelegentlichem Bruch oder Rollenwechsel, ihre Länge üblicherweise im Wesentlichen mit der Länge der hergestellten Faserverbundwerkstofflage übereinstimmt.

Als ein auf Polycarbonat basierender Kunststoff wird im Rahmen der vorliegenden Erfindung ein Kunststoff verstanden, der mindestens 50 Gew.-%, vorzugsweise mindestens 60 Gew.-%, bevorzugt mindestens 70 Gew.-%, insbesondere mindestens 80 Gew.-%, besonders bevorzugt mindestens 90 Gew.-%, ganz besonders bevorzugt mindestens 95 Gew.-%, insbesondere mindestens 97 Gew.-% Polycarbonat enthält. Anders ausgedrückt kann ein auf Polycarbonat basierender Kunststoff im Rahmen der vorliegenden Erfindung höchstens zu 50 Gew.-%, vorzugsweise höchstens 40 Gew.-%, bevorzugt höchstens 30 Gew.-%, insbesondere höchstens 20 Gew.-%, besonders bevorzugt höchstens 10 Gew.-%, ganz besonders bevorzugt höchstens 5 Gew.-%, insbesondere höchstens 3 Gew.-% einen oder mehrere von Polycarbonat verschiedene Kunststoffen als Blendpartner enthalten.

Gemäß einer besonderen Ausführungsform besteht der auf Polycarbonat basierende Kunststoff im Wesentlichen, insbesondere zu 100 Gew.-% aus Polycarbonat.

Wenn hier von Polycarbonat die Rede ist, so sind damit auch Mischungen verschiedener Polycarbonate gemeint. Ferner wird Polycarbonat hier als Oberbegriff verwendet und umfasst damit sowohl Homopolycarbonate als auch Copolycarbonate. Die Polycarbonate können ferner in bekannter Weise linear oder verzweigt sein.

Gemäß einer besonderen Ausführungsform der Erfindung besteht der auf Polycarbonat basierende Kunststoff zu 70 Gew.-%, 80 Gew.-%, 90 Gew.-% oder im Wesentlichen, insbesondere zu 100 Gew.-%, aus einem linearen Polycarbonat.

Die Herstellung der Polycarbonate kann in bekannter Weise aus Diphenolen, Kohlensäurederivaten, gegebenenfalls Kettenabbrechern und Verzweigern erfolgen. Einzelheiten der Herstellung von Polycarbonaten sind dem Fachmann seit mindestens etwa 40 Jahren gut bekannt. Beispielhaft sei hier auf Schnell, Chemistry and Physics of Polycarbonates, Polymer Reviews, Volume 9, Interscience Publishers, New York, London, Sydney 1964, auf D. Freitag, U. Grigo, P.R. Müller, H. Nouvertne, BAYER AG, Polycarbonates in Encyclopedia of Polymer Science and Engineering, Volume 11, Second Edition, 1988, Seiten 648-718 und schließlich auf U. Grigo, K. Kirchner und P.R. Müller Polycarbonate in BeckerBraun, Kunststoff-Handbuch, Band 31, Polycarbonate, Polyacetale, Polyester, Celluloseester, Carl Hanser Verlag München, Wien 1992, Seiten 117-299 verwiesen.

Die Herstellung aromatischer Polycarbonate erfolgt z.B. durch Umsetzung von Diphenolen mit Kohlensäurehalogeniden, vorzugsweise Phosgen, und oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern und gegebenenfalls unter Verwendung von trifunktionellen oder mehr als trifunktionellen Verzweigern. Ebenso ist eine Herstellung über ein Schmelzepolymerisationsverfahren durch Umsetzung von Diphenolen mit beispielsweise Diphenylcarbonat möglich. Für die Herstellung der Polycarbonate geeignete Diphenole sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, $\alpha$-$\alpha$'-Bis-(hydroxyphenyl)-diisopropylbenzole, Phtalimidine abgeleitet von Isatin- oder Phenolphthaleinderivaten sowie deren kernalkylierte, kernarylierte und kernhalogenierte Verbindungen.

Vorzugsweise werden bei den Diphenolen auf der Basis von Phthalimiden, wie beispielsweise 2-Aralkyl-3,3'-Bis-(4-hydroxyphenyl)-phthalimide oder 2-Aryl-3,3'-Bis-(4-hydroxyphenyl)-phthalimide wie 2-Phenyl-3,3'-Bis-(4-hydroxyphenyl)-phthalimid, 2-Alkyl-3,3'-Bis-(4-hydroxyphenyl)-phthalimide, wie 2-Butyl-3,3'-Bis-(4-hydroxyphenyl)-phthalimide, 2-Propyl-3,3'-Bis-(4-hydroxyphenyl)-phthalimide, 2-Ethyl-3,3'-Bis-(4-hydroxyphenyl)-phthalimide oder 2-Methyl-3,3'-Bis-(4-hydroxyphenyl)-phthalimide sowie Diphenolen auf der Basis von am Stickstoff substituierten Isatinen wie 3,3-Bis(4-hydroxyphenyl)-1-phenyl-1H-indol-2-on oder 2,2-Bis(4-hydroxyphenyl)-1-phenyl-1H-indol-3-on eingesetzt.

Bevorzugte Diphenole sind 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5- dimethyl-4-hydroxyphenyl)-p-diisopropylbenzol und 1,1-Bis-(4-hydroxyphenyl)-3,3,5-trimethylcyclohexan.

Besonders bevorzugte Diphenole sind 2,2-Bis-(4-hydroxyphenyl)-propan (Bisphenol A), 2,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethylcyclohexan und Dimethyl-Bisphenol A.

Diese und weitere geeignete Diphenole sind z.B. in US-A 3 028 635, US-A 2 999 825, US-A 3 148 172, US-A 2 991 273, US-A 3 271 367, US-A 4 982 014 und US-A 2 999 846, in DE-A 1 570 703, DE-A 2063 050, DE-A 2 036 052, DE-A 2 211 956 und DE-A 3 832 396, in FR-A 1 561 518, in der Monographie H. Schnell, Chemistry and Physics of Polycarbonates, Interscience Publishers, New York 1964 sowie in JP-A 620391986, JP-A 620401986 und JP-A 1055501986 beschrieben.

Im Fall der Homopolycarbonate wird nur ein Diphenol eingesetzt, im Fall der Copolycarbonate werden mehrere Diphenole eingesetzt.

Geeignete Kohlensäurederivate sind beispielsweise Phosgen oder Diphenylcarbonat. Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol, Cumylphenol, sowie deren Mischungen.

Bevorzugte Kettenabbrecher sind die Phenole, welche ein- oder mehrfach mit C1- bis C30-Alkylresten, linear oder verzweigt, bevorzugt unsubstituiert, oder mit tert-Butyl substituiert sind. Besonders bevorzugte Kettenabbrecher sind Phenol, Cumylphenol undoder p-tert-Butylphenol. Die Menge an einzusetzendem Kettenabbrecher beträgt bevorzugt 0,1 bis 5 Mol-%, bezogen auf Mole an jeweils eingesetzten Diphenolen. Die Zugabe der Kettenabbrecher kann vor, während oder nach der Umsetzung mit einem Kohlensäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4-dihydroxytriphenyl)-methyl)-benzol und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 3,00 Mol-%, bezogen auf Mole an jeweils eingesetzten Diphenolen. Die Verzweiger können entweder mit den Diphenolen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Diphenolen eingesetzt.

Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Des Weiteren können auch Copolycarbonate Verwendung finden. Zur Herstellung dieser Copolycarbonate können 1 Gew.-% bis 25 Gew.-%, vorzugsweise 2,5 Gew.-% bis 25 Gew.-%, besonders bevorzugt 2,5 Gew.-% bis 10 Gew.-%, bezogen auf die Gesamtmenge an einzusetzenden Diphenolen, Polydiorganosiloxane mit Hydroxyaryloxy-Endgruppen eingesetzt werden. Diese sind bekannt (US 3 419 634, US-PS 3 189 662, EP 0 122 535, US 5 227 449) und nach literaturbekannten Verfahren herstellbar. Ebenfalls geeignet sind Polydiorganosiloxanhaltige Copolycarbonate; die Herstellung der Polydiorganosiloxanhaltiger Copolycarbonate ist beispielsweise in der DE-A 3 334 782 beschrieben.

Die Polycarbonate können alleine oder als Mischung von Polycarbonaten vorliegen. Es ist auch möglich das Polycarbonat oder die Mischung von Polycarbonaten gemeinsam mit einem oder mehreren von Polycarbonat verschiedenen Kunststoffen als Blendpartner einzusetzen.

Als Blendpartner lassen sich Polyamide, Polyester, insbesondere Polybutylenterephthalat und Polyethylenterephthalat, Polylactid, Polyether, thermoplastisches Polyurethan, Polyacetal, Fluorpolymer, insbesondere Polyvinylidenfluorid, Polyethersulfone, Polyolefin, insbesondere Polyethylen und Polypropylen, Polyimid, Polyacrylat, insbesondere Poly(methyl)methacrylat, Polyphenylenoxid, Polyphenylensulfid, Polyetherketon, Polyaryletherketon, Styrolpolymerisate, insbesondere Polystyrol, Styrolcopolymere, insbesondere Styrolacrylnitrilcopolymer, Acrylnitrilbutadienstyrolblockcopolymere und Polyvinylchlorid einsetzen.

Zusätzlich sind optional bis zu 10,0 Gew.-%, bevorzugt 0,10 bis 8,0 Gew.-%, besonders bevorzugt 0,2 bis 3,0 Gew.-% sonstige übliche Additive enthalten.

Diese Gruppe umfasst Flammschutzmittel, Antitropfmittel, Thermostabilisatoren, Entformungsmittel, Antioxidantien, UV-Absorber, IR-Absorber, Antistatika, optische Aufheller, Lichtstreumittel, Farbmittel wie Pigmente, auch anorganischen Pigmente, Ruß und/oder Farbstoffe, und anorganische Füllstoffe in den für Polycarbonat üblichen Mengen. Diese Additive können einzeln oder auch im Gemisch zugesetzt werden.

Solche Additive, wie sie üblicherweise bei Polycarbonaten zugesetzt werden, sind beispielsweise in EP-A 0 839 623, WO-A 96/15102, EP-A 0 500 496 oder "Plastics Additives Handbook", Hans Zweifel, 5th Edition 2000, Hanser Verlag, München beschrieben.

Ein Mehrschichtverbundwerkstoff im Sinne der vorliegenden Erfindung weist mindestens drei übereinanderliegende Lagen Faserverbundwerkstoff auf.

Unter Faserverbundwerkstoff wird erfindungsgemäß ein Werkstoff verstanden, der Endlosfasern enthält, welche in eine Kunststoffmatrix eingebettet sind. Gemäß einer bevorzugten Ausführungsform der Erfindung weist der Mehrschichtverbundwerkstoff mindestens drei übereinanderliegende und miteinander flächig verbundene Lagen Faserverbundwerkstoff auf.

Die erfindungsgemäßen Faserverbundwerkstofflagen des Mehrschichtverbundwerkstoffs weisen Endlosfasern auf, die innerhalb der jeweiligen Lage unidirektional ausgerichtet sind und in einem auf Polycarbonat basierenden Kunststoff eingebettet sind. Die Endlosfasern erstrecken sich dabei insbesondere im Wesentlichen über die gesamte Länge der Lage Faserverbundwerkstoff.

Gemäß einer besonderen Ausführungsform der Erfindung sind alle Faserverbundwerkstofflagen des Mehrschichtverbundwerkstoffs flächig miteinander verbunden, wobei die Endlosfasern innerhalb der jeweiligen Lage unidirektional ausgerichtet sind und in einem auf Polycarbonat basierenden Kunststoff eingebettet sind. Optional können sich in dieser Ausführungsform weitere Materiallagen zwischen den Faserverbundwerkstofflagen befinden.

Neben den Lagen Faserverbundwerkstoff kann der erfindungsgemäße Mehrschichtverbundwerkstoff auch noch eine oder mehrere weitere Lagen enthalten. Beispielhaft seien hier weitere Lagen aus Kunststoff, der gleich oder verschieden von der in den Lagen Faserverbundwerkstoff verwendeten Kunststoffmatrix sein kann, genannt. Diese Kunststofflagen können insbesondere auch Füllstoffe, die von den erfindungsgemäß vorgesehenen Endlosfasern verschieden sind, enthalten. Ferner können auch Klebstoff-, Gewebe-, Vlies- oder Oberflächenvergütungslagen, beispielsweise Lackschichten im erfindungsgemäßen Mehrschichtverbundwerkstoff enthalten sein. Diese weiteren Lagen können zwischen innen- und außenliegenden Lagen Faserverbundwerkstoff, zwischen mehreren innenliegenden Lagen Faserverbundwerkstoff und/oder auf einer oder beiden der außenliegenden Lagen Faserverbundwerkstoff enthalten sein. Vorzugsweise sind die außenliegenden und die mindestens eine innenliegende Lage Faserverbundwerkstoff jedoch derart miteinander verbunden, dass keine weiteren Lagen dazwischenliegen. Praktische Versuche haben gezeigt, dass der erfindungsgemäße Mehrschichtverbundwerkstoff bereits vorteilhafte mechanische Eigenschaften und eine metallische Haptik und Optik ohne solche weiteren zwischenliegenden Materiallagen aufweist. Gemäß einer weiteren Ausführungsform sind alle faserenthaltenden Lagen des Mehrschichtverbundwerkstoffs erfindungsgemäßen Faserverbundwerkstofflagen, die Endlosfasern aufweisen, welche innerhalb der jeweiligen Lage unidirektional ausgerichtet sind und in einem auf Polycarbonat basierenden Kunststoff eingebettet sind. Der Mehrschichtverbundwerkstoff kann auch ausschließlich aus erfindungsgemäßen Faserverbundwerkstofflagen, die Endlosfasern aufweisen, welche innerhalb der jeweiligen Lage unidirektional ausgerichtet sind und in einem auf Polycarbonat basierenden Kunststoff eingebettet sind, bestehen, wobei optional noch auf einer oder beiden der außenliegenden Lagen Faserverbundwerkstoff eine oder mehrere Oberflächenvergütungslagen, beispielsweise Lackschichten, enthalten sein können.

Es hat sich im Rahmen der vorliegenden Erfindung als vorteilhaft erwiesen, wenn der Mehrschichtverbundwerkstoff sechs, vorzugsweise fünf, insbesondere vier, besonders bevorzugt drei, innenliegende Faserverbundwerkstofflagen umfasst. Der erfindungsgemäße Mehrschichtverbundwerkstoff kann aber auch zwei oder mehr als sechs, beispielsweise sieben, acht, neun, zehn oder mehr als zehn innenliegende Faserverbundwerkstofflagen umfassen.

Die einzelnen Lagen Faserverbundwerkstoff können im Wesentlichen gleich oder unterschiedlich aufgebaut und/oder orientiert sein.

Unter einem im Wesentlichen gleichen Aufbau der Faserverbundwerkstofflagen wird im Rahmen der Erfindung verstanden, dass mindestens ein Merkmal aus der Gruppe chemische Zusammensetzung, Faservolumengehalt und Schichtdicke gleich ist.

Unter chemischer Zusammensetzung wird die chemische Zusammensetzung der Kunststoffmatrix des Faserverbundwerkstoffs und/oder die chemische Zusammensetzung der Endlosfasern verstanden.

Gemäß einer bevorzugten Ausführungsform der Erfindung sind die außenliegenden Lagen Faserverbundwerkstoff in Bezug auf ihre Zusammensetzung, ihren Faservolumengehalt und ihre Schichtdicke im Wesentlichen gleich aufgebaut.

Als außenliegende Lage Faserverbundwerkstoff wird erfindungsgemäß die jeweils relativ zu den anderen Faserverbundwerkstofflagen des Mehrschichtverbundwerkstoffs am weitesten außen liegende Faserverbundwerkstofflage verstanden, die Endlosfasern enthält, welche innerhalb der Lage unidirektional ausgerichtet sind und in einem auf Polycarbonat basierenden Kunststoff eingebettet sind. Innenliegende Lagen im Sinne der Erfindung sind somit alle Faserverbundwerkstofflagen, die sich zwischen den beiden außenliegenden Lagen befinden. Es liegt ausdrücklich im Rahmen dieser Erfindung, dass sich außerhalb der außenliegenden Lagen Faserverbundwerkstoff noch eine oder mehrere weitere Materiallagen befinden können, beispielsweise eine oder mehrere Kunststofflagen, eine Verblendung bzw. Furnier (Veneer) und/oder Lackschichten.

Unidirektional im Sinne der Erfindung bedeutet, dass die Endlosfasern im Wesentlichen unidirektional ausgerichtet sind, also der Länge nach in eine Richtung zeigen und damit die gleiche Laufrichtung aufweisen. Mit "im Wesentlichen unidirektional" ist hier gemeint, dass eine Abweichung der Faserlaufrichtung von bis zu 5% möglich ist. Bevorzugt beträgt die Abweichung der Faserlaufrichtung jedoch deutlich unter 3%, besonders bevorzugt deutlich unter 1%.

Beispiele für erfindungsgemäß geeignete Endlosfasern sind Glasfasern, Kohlenstofffasern, Basaltfasern, Aramidfasern, Liquid-crystal-Polymer-Fasern, Polyphenylensulfid-Fasern, Polyetherketon-Fasern, Polyetheretherketon-Fasern, Polyetherimid-Fasern und deren Mischungen. Als besonders praxisgerecht hat sich der Einsatz von Glasfasern oder Kohlenstofffasern erwiesen.

Gemäß einer besonders bevorzugten Ausführungsform der Erfindung werden als Fasern Kohlenstofffasern eingesetzt.

Es hat sich für bestimmte Ausführungsformen der Erfindung als besonders praxisgerecht erwiesen, Endlosfasern, insbesondere Kohlenstofffasern, mit einem E-Modul von größer 240 GPa, bevorzugt größer 245 GPa, besonders bevorzugt von 250 GPa oder mehr einzusetzen. Solche Kohlenstofffasern sind beispielsweise unter der Bezeichnung Pyrofil von der Firma Mitsubishi Rayon CO.,LtD. im Handel erhältlich. Praktische Versuche haben gezeigt, dass sich diese Kohlenstofffasern durch eine besonders gute Spreitbarkeit bei der Verarbeitung zu einer erfindungsgemäßen Faserverbundwerkstofflage auszeichnen.

Es liegt im Rahmen der Erfindung dass auf der außenliegenden Lage Faserverbundwerkstoff weitere Lagen aufgebracht werden können, wobei es sich bei diesen Lagen beispielsweise um weitere Faserverbundwerkstofflagen, Kunststofflagen oder Lackschichten handeln kann, wobei die Faserverbundwerkstofflagen, die auf die außenliegenden Lagen Faserverbundwerkstoff aufgebracht werden können, keine Endlosfasern enthält, welche innerhalb der Lage unidirektional ausgerichtet sind und in einem auf Polycarbonat basierenden Kunststoff eingebettet sind.

Gemäß einer besonderen Ausführungsform der Erfindung sind die mindestens drei Lagen Faserverbundwerkstoff im Wesentlichen symmetrisch angeordnet, wobei die beiden außenliegenden Lagen Faserverbundwerkstoff in Bezug auf ein Merkmal aus der Gruppe chemische Zusammensetzung, Faservolumengehalt und Schichtdicke im Wesentlichen gleich aufgebaut sind.

Im Wesentlichen symmetrisch im Sinne der Erfindung bedeutet, dass die Faserverbundwerkstofflagen des Mehrschichtverbundwerkstoffs in Bezug auf eine, auf der Hälfte der durch die beiden außenliegenden Lagen Faserverbundwerkstoff nach außen begrenzten Dicke des Mehrschichtverbundwerkstoffs, parallel zu den Lagen Faserverbundwerkstoff verlaufenden Spiegelebene in Bezug auf mindestens ein Merkmal, vorzugsweise alle Merkmale, aus der Gruppe chemische Zusammensetzung, Faservolumengehalt und Schichtdicke im Wesentlichen gleich aufgebaut sind.

Gemäß einer bevorzugten Ausführungsform der Erfindung sind die mindestens drei Lagen Faserverbundwerkstoff im Wesentlichen symmetrisch angeordnet, wobei die beiden außenliegenden Lagen Faserverbundwerkstoff in Bezug auf alle Merkmale aus der Gruppe chemische Zusammensetzung, Faservolumengehalt und Schichtdicke im Wesentlichen gleich aufgebaut sind. Gemäß einer weiteren besonders bevorzugten Ausführungsform der Erfindung sind die mindestens drei Lagen Faserverbundwerkstoff symmetrisch angeordnet, wobei die beiden außenliegenden Lagen Faserverbundwerkstoff gleich aufgebaut sind.

Im erfindungsgemäßen Mehrschichtverbundwerkstoff weisen die außenliegenden Lagen Faserverbundwerkstoff einen geringeren Volumengehalt an Fasern, bezogen auf das Gesamtvolumen der Lage Faserverbundwerkstoff, auf als die mindestens eine innenliegende Lage Faserverbundwerkstoff. Ohne an wissenschaftliche Theorien gebunden sein zu wollen, scheint der geringere Faservolumengehalt in den außenliegenden Faserverbundwerkstofflagen zu einer verbesserten Benetzung der Endlosfasern durch den auf Polycarbonat basierenden Kunststoff zu führen, so dass im Wesentlichen alle Endlosfasern und die zwischenliegenden Hohlräume benetzt werden. Somit kann die Ausbildung von Störstellen auf der Oberfläche des Mehrschichtverbundwerkstoffs in Form von trockenen aus der Oberfläche herausragenden Fasern und Lufteinschlüssen durch einen geringeren Faservolumengehalt der außenliegenden Faserverbundwerkstofflagen des erfindungsgemäßen Mehrschichtverbundwerkstoffs im Wesentlichen vermieden werden. Überraschenderweise ist es durch den erfindungsgemäßen Lagenaufbau möglich, trotz des geringeren Volumengehalts an Fasern in den außenliegenden Schichten, immer noch Verbundwerkstoffe mit guten mechanischen Eigenschaften zu erhalten.

Gemäß einer Ausführungsform der Erfindung weisen die außenliegenden Lagen Faserverbundwerkstoff einen Faservolumengehalt von höchstens 50 Vol.%, vorzugsweise höchstens 45 Vol.-%, insbesondere höchstens 42 Vol.-% auf.

Gemäß einer besonderen Ausführungsform der Erfindung weisen die außenliegenden Lagen Faserverbundwerkstoff einen Faservolumengehalt von mindestens 30 Vol.-%, vorzugsweise mindestens 35 Vol.-%, insbesondere mindestens 37 Vol.-% auf.

Die innenliegenden Lagen Faserverbundwerkstoff können einen Faservolumengehalt von 40 bis 60 Vol.-%, bevorzugt 45 bis 55 Vol.-%, besonders bevorzugt 48 bis 52 Vol.-% bezogen auf das Gesamtvolumen der Lage Faserverbundwerkstoff aufweisen.

Unter Vol.-% wird hier der Volumenanteil (% v/v) bezogen auf das Gesamtvolumen der Lage Faserverbundwerkstoff verstanden

Beträgt der Faservolumengehalt weniger als 30 Vol.-%, so sind die mechanischen Eigenschaften des resultierenden Faserverbundwerkstoffs bei punktueller Belastung oftmals nicht optimal, d.h. der Faserverbundwerkstoff kann einer punktueller Belastung nicht genügend standhalten und teils sogar durchstoßen werden. Ein Faservolumengehalt von über 60 Vol.% führt ebenfalls zu einer Verschlechterung der mechanischen Eigenschaften des Faserverbundwerkstoffs. Ohne an wissenschaftliche Theorien gebunden sein zu wollen, scheint dies darauf zurückführbar zu sein, dass die Fasern bei der Imprägnierung bei derartig hohen Faservolumengehalten nicht mehr ausreichend benetzt werden können, was zu einer Zunahme an Lufteinschlüssen und zu einem vermehrten Auftreten von Oberflächendefekten im Faserverbundwerkstoff führt, die sich nachteilig auf die mechanischen Eigenschaften auswirken.

Gemäß einer bevorzugten Ausführungsform der Erfindung weist der Mehrschichtverbundwerkstoff eine Gesamtdicke von 0,5 bis 2 mm, vorzugsweise 0,8 bis 1,8 mm, insbesondere 0,9 bis 1,2 mm auf. Praktische Versuche haben gezeigt, dass es mit dem erfindungsgemäßen Mehrschichtverbundwerkstoff möglich ist, selbst bei diesen geringen Dicken ausgesprochen gute mechanische Eigenschaften zu erzielen.

Dabei hat es sich als besonders vorteilhaft erwiesen, wenn die Summe aller innenliegenden Lagen Faserverbundwerkstoff eine Gesamtdicke von 200 $\mu$m bis 1200 $\mu$m, bevorzugt 400 $\mu$m bis 1000 $\mu$m, besonders bevorzugt 500 $\mu$m bis 750 $\mu$m aufweist.

Vorteilhaft im Rahmen der Erfindung ist es ferner, wenn die Dicke jeder einzelnen der beiden außenliegenden Lagen Faserverbundwerkstoff jeweils 100 bis 250 $\mu$m, bevorzugt, 120 $\mu$m bis 230 $\mu$m, besonders bevorzugt 130 $\mu$m bis 180 $\mu$m beträgt.

In Bezug auf die mechanischen Eigenschaften wurde im Rahmen der Erfindung überraschend festgestellt, dass sich besonders gute Ergebnisse einstellen, wenn der erfindungsgemäße Mehrschichtverbundwerkstoff ein Dickenverhältnis der Summe der beiden außenliegenden Lagen zu der Summe aller innenliegenden Lagen Faserverbundwerkstoff von 0,3 bis 0,65, bevorzugt von 0,35 bis 0,58, besonders bevorzugt von 0,39 bis 0,5 aufweist. Überraschenderweise wurde festgestellt, dass ein Mehrschichtverbundwerkstoff, der das vorgenannten Dickenverhältnis der Summe der beiden außenliegenden Lagen zu der Summe aller innenliegenden Lagen im Vergleich zu einem Mehrschichtverbundwerkstoff, der dieses Dickenverhältnis nicht aufweist, weiter verbesserte mechanische Eigenschaften zeigt. So ist es insbesondere möglich, mit dem vorgenannten Dickenverhältnis Mehrschichtverbundwerkstoffen zu erhalten, welche bei Messungen gemäß der im experimentellen Teil beschrieben Methoden sowohl in 0° als auch in 90° ein für die Verwendung als Gehäuseteil für elektronische Geräte ausreichend hohes E-Modul aufweisen.

In Ausführungsformen, bei denen es auf eine weitere Verbesserung der Optik und Glattheit der Oberfläche des Mehrschichtverbundwerkstoffs ankommt, hat es sich ebenfalls als vorteilhaft erwiesen, wenn der erfindungsgemäße Mehrschichtverbundwerkstoff ein Dickenverhältnis der Summe der beiden außenliegenden Lagen zu der Summe aller innenliegenden Lagen Faserverbundwerkstoff von 0,3 bis 0,65, bevorzugt von 0,35 bis 0,58, besonders bevorzugt von 0,39 bis 0,5 aufweist. Praktische Versuche haben gezeigt, dass diese Mehrschichtverbundwerkstoffe eine verringerte Welligkeit der Oberfläche des Mehrschichtverbundwerkstoffs aufweisen, was mit einer verbesserten Optik, Glattheit und einer verbesserten Lackierbarkeit der Oberfläche einhergeht. Insbesondere weist die Oberfläche mindestens einer der außenliegenden Lagen Faserverbundwerkstoff eine quadratische Mittenwelligkeit (Wq) kleiner 10,5 $\mu$m, bevorzugt kleiner 10,0 $\mu$m, besonders bevorzugt kleiner 9,5 $\mu$m und/oder eine arithmetische Mittenwelligkeit (Wa) kleiner 8,5 $\mu$m, bevorzugt kleiner 8,0 $\mu$m besonders bevorzugt kleiner 7,5 $\mu$m und/oder einer Gesamthöhe des Welligkeitsprofils auf der Berechnungslänge (Wt) kleiner 60,0 $\mu$m, bevorzugt kleiner 58,0 $\mu$m, besonders bevorzugt kleiner 56,0 $\mu$m auf. von auf.

Als besonders praxisgerecht hat es sich erwiesen, wenn die innenliegenden Lagen Faserverbundwerkstoff gleich orientiert sind und ihre Orientierung relativ zu den außenliegenden Lagen Faserverbundwerkstoff um 90° rotiert ist. Es ist aber auch denkbar, die innenliegenden Lagen relativ zu den außenliegenden Lagen um 30°, 40°, 50°, 60°, 70° oder 80° zu rotieren. Dabei kann die Orientierung in jedem Fall um $\pm 5°$, bevorzugt um $\pm 3°$, besonders bevorzugt um $\pm 1°$ von den genannten Richtwerten abweichen.

Die Faserverbundwerkstofflagen des erfindungsgemäßen Mehrschichtverbundwerkstoffs können mit den üblichen dem Fachmann bekannten Verfahren zur Herstellung von Faserverbundwerkstoffen hergestellt werden.

Besonders gute Ergebnisse im Hinblick auf die mechanischen Eigenschaften und die Oberflächenglätte stellen sich ein, wenn folgendes Herstellungsverfahren angewendet wird: Gemäß einer bevorzugten Ausführungsform der Erfindung sind die Faserverbundwerkstofflagen des Mehrschichtverbundwerkstoffs herstellbar durch Auftragen eines geschmolzenen auf Polycarbonat basierenden Kunststoffs auf ein über die Glasübergangstemperatur des Kunststoffs vorgeheiztes Endlos-Faserband unter Druck-Scher-Vibrationsbeaufschlagung. Ein derartiges Herstellungsverfahren ist in DE 10 2011 005 462 B3 beschrieben.

Überraschend wurde gefunden, dass sich die so hergestellten Faserverbundwerkstofflagen trotz der Verwendung eines auf Polycarbonat basierenden und damit spannungsrissanfälligen Kunststoffs durch einen besonders geringen Anteil von Lufteinschlüssen und sehr gute mechanische Eigenschaften auszeichnen. Der aus den so hergestellten Faserverbundwerkstofflagen erhältliche erfindungsgemäße Mehrschichtverbundwerkstoff weist neben metallischer Haptik und Optik ferner sehr gute mechanische Eigenschaften, insbesondere im Hinblick auf punktuelle Belastungen, auf.

Bevorzugt weisen die mindestens drei Lagen Faserverbundwerkstoff des erfindungsgemäßen Mehrschichtverbundwerkstoffs im Wesentlichen keine Hohlräume, insbesondere im Wesentlichen keine Lufteinschlüsse, auf.

Im Wesentlichen keine Hohlräume bedeutet gemäß einer Ausführungsform, dass der Hohlraumgehalt der mindestens drei Lagen Faserverbundwerkstoff des erfindungsgemäßen Mehrschichtverbundwerkstoffs unter 2 Vol.-%, insbesondere unter 1 Vol.-%, besonders bevorzugt unter 0,5 Vol.-%, beträgt.

Die Ermittlung des Hohlraumgehalts einer Faserverbundwerkstofflage oder des Mehrschichtverbundwerkstoffs kann auf unterschiedlichen Wegen erfolgen, welche als allgemein anerkannt betrachtet werden. Beispielsweise kann der Hohlraumgehalt eines Prüfkörpers durch den Harz-Veraschungstest erfolgen, bei dem ein Probekörper in einem Ofen beispielsweise einer Temperatur von 600°C für 3 Stunden ausgesetzt wird, um das Harz, welches die Fasern in dem Probekörper umschließt zu verbrennen. Die Masse der derart freigelegten Fasern kann dann ermittelt werden um in einem weiteren kalkulatorischen Schritt auf den Hohlraumgehalt des Probekörpers zu schließen. Ein derartiger Harz-Veraschungstest kann in Anlehnung an die ASTM D 2584-08 durchgeführt werden, um die Einzelgewichte der Fasern und der Polymermatrix zu bestimmen. Hieraus kann in einem weiteren Schritt der Hohlraumgehalt des Probekörpers ermittelt werden, indem die nachfolgende Gleichung 1 genutzt wird:

$$V_f = 100 * (\rho_t - \rho_c) / \rho_t \qquad \text{(Gleichung 1)}$$

wobei

$V_f$ den Hohlraumgehalt der Probe in [%];

$\rho_c$ die Dichte des Probekörpers, beispielsweise ermittelt durch Flüssig- oder Gaspyknometrie;

$\rho_t$ die theoretische Dichte des Probekörpers ermittelt nach folgender Gleichung 2

$$\rho_t = 1 \, / \, [W_f / \, \rho_f + W_m / \, \rho_m] \qquad \text{(Gleichung 2)}$$

$\rho_m$    die Dichte der Polymermatrix (beispielsweise bei einer entsprechenden Kristallinität);

$\rho_f$    die Dichte der verwendeten Fasern;

$W_f$    der Gewichtsanteil der verwendeten Fasern und

$W_m$    der Gewichtsanteil der Polymermatrix; sind.

Alternativ kann der Hohlraumgehalt durch chemisches Auflösen der Polymermatrix aus dem Probekörper heraus in Anlehnung an ASTM D 3171-09 erfolgen. Der Harz-Veraschungstest sowie die chemische Auflösungsmethode sind eher für Glasfasern geeignet, welche im Allgemeinen gegen schmelzen oder chemischer Behandlung inert sind. Weitere Methoden für sensitivere Fasern sind die indirekte Berechnung des Hohlraumgehalts über die Dichten des Polymers, der Fasern sowie des Probekörpers nach ASTM D 2734-09 (Methode A), wobei die Dichten nach ASTM D792-08 (Methode A) bestimmt werden können. Des Weiteren können auch bildverarbeitende Programme, Rasterschablonen oder das Auszählen der Fehlstellen zur Auswertung des Hohlraumgehalts einer Bildaufnahme, welche durch konventionelle Mikroskopie ermittelt wurde, herangezogen werden.

Ein weiterer Weg zur Bestimmung des Hohlraumgehalts ist die Dickendifferenzmethode, welche in der Ermittlung der Schichtdickendifferenz zwischen theoretischer Bauteildicke und der tatsächlichen Bauteildicke bei bekannten Flächengewichten und Dichten von Polymer sowie Faser besteht. Bei der Berechnung der theoretischen Bauteildicken wird davon ausgegangen, dass keine Hohlräume in dem Aufbau vorhanden sind und eine vollständige Benetzung der Fasern mit Polymer vorliegt. Der Bezug der Dickendifferenz auf die tatsächliche Bauteildicke ergibt den prozentualen Hohlraumgehalt. Die Messung der Dicken kann hierbei beispielsweise mit einer Bügelmessschraube erfolgen. Fehlerminimierte Ergebnisse lassen sich bei dieser Methode bevorzugt durch die Ermittlung des Hohlraumgehalts an Bauteilen bestehend aus mehreren Einzelschichten, bevorzugt mehr als 4 Schichten, besonders bevorzugt mehr als 6 Schichten und ganz besonders bevorzugt mehr als 8 Schichten, bestimmen.

Während all die oben beschriebenen Verfahren bei Mittesten eines entsprechenden Standards zu vergleichbaren Ergebnissen führen, wurden die Hohlraumgehalte, wie hier beschrieben, mittels der Dickendifferenzmethode wie in den Beispielen angegeben durchgeführt.

Ganz besonders bevorzugt weisen die drei Lagen Faserverbundwerkstoff des erfindungsgemäßen Mehrschichtverbundwerkstoffs keine Hohlräume, insbesondere keine Lufteinschlüsse, auf.

Unter einem Endlos-Faserband wird erfindungsgemäß eine Mehrzahl von zusammengeführten Rovings verstanden, wobei es sich bei den Rovings um Bündel aus vielen Endlosfasernohne Drall handelt.

Das bevorzugte Verfahren zur Herstellung einer Faserverbundwerkstofflage des Mehrschichtverbundwerkstoffs umfasst insbesondere die folgenden Schritte:

-    Bereitstellen eines Endlos-Faserbandes und Fördern des Endlos-Faserbandes längs eines Bearbeitungsweges,
-    Vorheizen des Endlos-Faserbandes auf eine Bearbeitungstemperatur, die höher ist als die Glasübergangstemperatur des auf Polycarbonat basierenden Kunststoffs,
-    Auftragen des geschmolzenen auf Polycarbonat basierenden Kunststoffs auf einer gesamten Breite des Endlos-Faserbandes auf einer Oberfläche des Endlos-Faserbandes,
-    Aufbringen eines Drucks auf das Endlos-Faserband senkrecht zur Bandebene nach dem Auftragen des auf Polycarbonat basierenden Kunststoffs, wobei das Druckaufbringen mit mindestens einem Druckstempel bei gleichzeitiger Scher-Vibrationsbeaufschlagung des Druckstempels mit einer Vibrations-Bewegungskomponente in der Bandebene und quer zu einer Band-Laufrichtung erfolgt,
-    Halten des Endlos-Faserbandes innerhalb eines Bearbeitungstemperaturbereiches oberhalb der Glasübergangstemperatur des auf Polycarbonat basierenden Kunststoffs mindestens bis nach Abschluss der Druck-Scher-Vibrationsbeaufschlagung.

Ein Schmelzauftrag mit nachfolgender Druck-Scher-Vibrationsbeaufschlagung, solange das Roh-Faserband eine Temperatur oberhalb der Glasübergangstemperatur des auf Polycarbonat basierenden Kunststoffs hat, führt zu einem wirksamen Einarbeiten der Kunststoffschmelze in die gesamte Faser-Volumenstruktur des Roh-Faserbandes. Bevorzugt wird eine Temperatur des Endlos-Faserbandes von 380°C nicht überschritten. Üblicherweise beträgt die Temperatur des Endlosfaserbandes zwischen 180°C bis 260°C, bevorzugt zwischen 200°C bis 240°C, besonders bevorzugt zwischen 210°C bis 230°C, insbesondere 220°C. Wenn hier von Erhitzen über die Glasübergangstemperatur des Kunststoffs oder Halten über der Glasübergangstemperatur des Kunststoffs die Rede ist, so ist damit das Erhitzen auf eine Temperatur gemeint, bei der der Kunststoff vollständig geschmolzen vorliegt. Die Glasübergangstemperatur des Kunststoffs kann mittels DIN EN ISO 17025 bestimmt werden. Eine Differenz zwischen der Fasertemperatur und der Schmelzetemperatur beim Zusammentreffen der Kunststoffschmelze mit dem Endlos-Faserband liegt im Bereich von 60°C bis 120°C, bevorzugt von 70°C bis 110°C, besonders bevorzugt von 80°C bis 100°C. Durch die Druck-Scher-Vibrationsbeaufschlagung werden Gasvolumina, die sich noch innerhalb des Roh-Faserbandes befinden, effizient ausgetrieben. Das Verfahren kann kontinuierlich durchgeführt werden. Das Halten des Endlos-Faserbandes auf einer Temperatur oberhalb der Glasübergangstemperatur des Kunststoffs stellt sicher, dass der auf Polycarbonat basierende Kunststoff nicht unerwünscht vor dem vollständigen Eindringen und Teilen innerhalb und auf dem Endlos-Faserband erstarrt. Dieses Beibehalten einer Temperatur oberhalb der Glasübergangstemperatur des Kunststoffs kann nach Abschluss der Druck-Scher-Vibrationsbeaufschlagung noch während eines Beruhigungsintervalls fortgesetzt werden. Nach dem Durchführen der angegebenen Verfahrensschritte kann das hergestellte, imprägnierte Endlos-Faserband definiert abgekühlt werden. Das Endlos-Faserband kann eine Vielzahl von Endlos-Fasern aufweisen. Aufgrund der Druck-Scher-Vibrationsbeaufschlagung kann eine geringe bis nicht vorhandene Schädigung der Fasern bei guter Kunststoffdurchdringung des Faserbandes, also bei guter Imprägnierung, realisiert werden.

Besonders bevorzugt wird das Verfahren zur Herstellung einer Faserverbundwerkstofflage des Mehrschichtverbundwerkstoffs so geführt, dass das Auftragen des auf Polycarbonat basierenden Kunststoffs auf das Endlos-Faserband erfolgt, während das Endlos-Faserband unter Normal-Umgebungsdruck gefördert wird. Ein solches Auftragen des Kunststoffs vermeidet eine aufwändige Abdichtung einer unter Druck stehenden Auftragskammer nach außen.

Es ist ferner bevorzugt, das Verfahren zur Herstellung einer Faserverbundwerkstofflage des Mehrschichtverbundwerkstoffs so zu führen, dass die Druck-Scher-Vibrationsbeaufschlagung eines Abschnitts des Endlos-Faserbandes nach dem Kunststoffauftrag mehrmals hintereinander längs des Bearbeitungsweges erfolgt. Es ist auch möglich das Verfahren so zu führen, dass die Druck-Scher-Vibrationsbeaufschlagung eines Abschnitts des Endlos-Faserbandes nach dem Kunststoffauftrag von beiden Seiten der Bandebene her erfolgt. Eine mehrfache Druck-Scher-Vibrationsbeaufschlagung erhöht die Effizienz des Herstellungsverfahrens. Quer-Bewegungskomponenten der verschiedenen Druck-Scher-Vibrationsbeaufschlagungseinrichtungen können synchronisiert gegenläufig, also im Gegentakt, gesteuert werden. Zwischen den hintereinander erfolgenden Druck-Scher-Vibrationsbeaufschlagungen kann gezielt jeweils ein Beruhigungsintervall vorgesehen sein, bei dem das Roh-Faserband während einer vorgegebenen Zeitspanne nicht mit Druck und/oder Scher-Vibration beaufschlagt ist. Eine Druck-Scher-Vibrationsbeaufschlagung von beiden Seiten her kann durch Druckbeaufschlagungseinrichtungen erfolgen, die im Bearbeitungsweg nacheinander angeordnet sind. Alternativ ist eine gleichzeitige Druck-Scher-Vibrationsbeaufschlagung von beiden Seiten her möglich. Auch die Druck-Scher-Vibrationsbeaufschlagung von beiden Seiten her kann mit einer synchronisierten Gegenläufigkeit der Quer-Bewegungskomponenten, also im gesteuerten Gegentakt, erfolgen.

Die Frequenzen der Druck-Scher-Vibrationsbeaufschlagung können im Bereich zwischen 1 Hz und 40 kHz liegen. Amplituden der Scher-Vibrationsbeaufschlagung können im Bereich zwischen 0,1 mm und 5 mm liegen. Ein Druck der Druck-Scher-Vibrationsbeaufschlagung kann im Bereich zwischen 0,01 MPa und 2 MPa liegen.

Ein weiterer Gegenstand der Erfindung ist ein Verfahren zur Herstellung eines erfindungsgemäßen Mehrschichtverbundwerkstoffs, umfassend folgende Schritte:

- Bereitstellen mindestens einer innenliegender Lage Faserverbundwerkstoff und zweier außenliegender Lagen Faserverbundwerkstoff, wobei die Herstellung der einzelnen Faserverbundwerkstofflagen durch Auftragen eines geschmolzenen auf Polycarbonat basierenden Kunststoffs auf ein über die Glasübergangstemperatur des Kunststoffs vorgeheiztes Endlos-Faserband unter Druck-Scher-Vibrationsbeaufschlagung erfolgt,

- Einlegen der mindestens einen innenliegenden Lage Faserverbundwerkstoff zwischen die außenliegenden Faserverbundwerkstofflagen, wobei die innenliegenden Lagen Faserverbundwerkstoff gleich orientiert sind und ihre Orientierung relativ zu den außenliegenden Lagen Faserverbundwerkstoff um 30° bis 90° rotiert ist,

- Verbinden der geschichteten Lagen Faserverbundwerkstoff, insbesondere mittels Druck und/oder Temperatur, zum Mehrschichtverbundwerkstoff.

Unter dem Verbinden der geschichteten Lagen Faserverbundwerkstoff wird erfindungsgemäß jedes Verfahren verstanden, welches eine körperliche Verbindung der geschichteten Lagen Faserverbundwerkstoff zur Folge hat. Vorzugsweise erfolgt das Verbinden der geschichteten Lagen Faserverbundwerkstoff zum Mehrschichtverbundwerkstoff mittels Druck und/oder Temperatur, z.B. durch Laminierung. Der zum Verbinden der geschichteten Lagen Faserverbundwerkstoff zum Mehrschichtverbundwerkstoff eingesetzte Druck kann im Bereich von 5 bis 15 bar, bevorzugt 7 bis 13 bar, besonders bevorzugt 8 bis 12 bar liegen. Die Temperatur zum Verbinden der Faserverbundwerkstofflagen kann 80°C bis 300°C betragen. Wird ein Verbindungsverfahren mit Heiz- und Kühlzonen angewendet, so kann die Temperatur zum Verbinden der Faserverbundwerkstofflagen in den Heizzonen von 220°C bis 300°C, bevorzugt von 230°C bis 290°C, besonders bevorzugt von 240°C bis 280°C, betragen. Die Temperatur in den Kühlzonen kann von 80°C bis 140°C, bevorzugt von 90°C bis 130°C, besonders bevorzugt von 100°C bis 120°C, betragen.

Neben dem Laminieren sind jedoch auch beispielsweise Kleben oder Schweißen zum Verbinden der geschichteten Lagen Faserverbundwerkstoff möglich

Gemäß einer bevorzugten Ausführungsform resultiert das Verbinden der geschichteten Lagen Faserverbundwerkstoff in flächig miteinander verbundenen Lagen Faserverbundwerkstoff. Flächig bedeutet dabei, dass mindestens 50 %, vorzugsweise mindestens 75 %, 90 %, 95 %, 99 % oder 100 % ("vollflächige" Verbindung) der einander zugewandten Oberflächen zweier benachbarter Lagen Faserverbundwerkstoff miteinander unmittelbar verbunden sind. Der Grad der Verbindung kann mikroskopisch in Querschnitten bestimmt werden oder auch durch die Abwesenheit von Hohlräumen, z.B. Lufteinschlüssen, im Faserverbundwerkstoff bestimmt werden.

Zur Herstellung eines Gehäuseteils, welches geeignet ist für die Verwendung als oder den Einsatz in einem Gehäuse eines elektronischen Geräts, werden die folgenden Schritte durchgeführt:

a) Bereitstellen eines erfindungsgemäßen Mehrschichtverbundwerkstoffs als Ausgangsmaterial,

b) Umformung und/oder Assemblierung mit weiteren Komponenten zum Gehäuseteil.

Gehäuseteil im Sinne der Erfindung ist jedes Teil, welches für die Verwendung als oder den Einsatz in einem Gehäuse eines elektronischen Geräts (IT-Gehäuse) geeignet ist. Beispielsweise kann ein Gehäuseteil im Sinne der Erfindung die Rückseite eines Mobiltelefons, die Unterseite eines Laptops, die Monitorrückseite eines Laptops, die Rückseite eines Tablets, etc. darstellen oder aber auch nur Bestandteil einer Rückseite eines Mobiltelefons, einer Unterseite eines Laptops, einer Monitorrückseite eines Laptops, einer Rückseite eines Tablets, etc. sein.

Gemäß einer besonderen Ausführungsform stellt das Gehäuseteil die Monitorrückseite (sogenanntes "a-cover") oder die Unterseite eines Laptops (sogenanntes "d-cover") dar oder ist ein Bestandteil der Monitorrückseite oder der Unterseite eines Laptops.

Ein weiterer Vorteil des erfindungsgemäßen Mehrschichtverbundwerkstoffs ist, dass er in beliebige Formen umgeformt werden kann. Zur Umformung können alle dem Fachmann bekannten Umformungsverfahren eingesetzt werden. Solche Umformungsverfahren können unter Druck- und/oder Wärmeeinwirkung erfolgen.

Gemäß einer Ausführungsform des erfindungsgemäßen Verfahrens erfolgt die Umformung unter Wärmeeinwirkung, insbesondere durch Thermoformierung.

Ein weiterer Gegenstand der Erfindung ist ein Gehäuseteil, welches geeignet ist für die Verwendung als oder den Einsatz in einem Gehäuse eines elektronischen Geräts, wobei das Gehäuseteil einen erfindungsgemäßen Mehrschichtverbundwerkstoff enthält oder nach dem erfindungsgemäßen Verfahren zur Herstellung eines Gehäuseteils erhältlich ist und wobei das Gehäuse eines elektronischen Geräts vorzugsweise die Monitorrückseite oder die Unterseite eines Laptops darstellt.

Ferner ist Gegenstand der vorliegenden Erfindung ein elektronisches Gerät, insbesondere ein Computer, Monitor, Tablet oder Telefon, enthaltend einen erfindungsgemäßen Mehrschichtverbundwerkstoff oder erhältlich nach einem Verfahren zur Herstellung eines Gehäuseteils, wobei der Computer vorzugsweise ein Laptop ist.

Um als Gehäuse eines elektronischen Geräts verwendet zu werden oder in einem Gehäuse eines elektronischen Geräts eingesetzt zu werden, sollte der erfindungsgemäße Mehrschichtverbundwerkstoff einer punktuellen Belastung, wie sie beispielsweise beim Herunterfallen eines elektronischen Geräts oder dem unbeabsichtigten Drauftreten erzeugt wird, standhalten können. Die erfindungsgemäßen Mehrschichtverbundwerkstoffe weisen nicht nur eine besonders ästhetische im Wesentlichen störstellenfreie Oberfläche auf, sondern widerstehen auch besonders gut punktuellen Belastungen. Dies macht Sie insbesondere für den Einsatz in IT-Gehäusen besonders geeignet.

Überraschenderweise wurde gefunden, dass ein erfindungsgemäßer Mehrschichtverbundwerkstoff mit einer E-Modul Kombination in 0° Richtung von größer 55 GPa und einem E-Modul in 90° Richtung von größer 28 GPa, besonders gut die an ein Gehäuse eines elektronischen Geräts gestellten Anforderungen der punktuellen Belastbarkeit erfüllt. Bevorzugt weist ein erfindungsgemäßer Mehrschichtverbundwerkstoff eine E-Modul Kombination in 0° Richtung von größer 60 GPa und einem E-Modul in 90° Richtung von größer 28 GPa auf. Wie in den Ausführungsbeispielen veranschaulicht, kann man diese Auswahlregel v.a. durch Einstellung der relativen Schichtdicken im Mehrschichtverbundwerkstoff und/oder der Faservolumengehalte befolgen.

Zur Erfindung gehört auch eine Faserverbundwerkstofflage, umfassend unidirektional ausgerichtete, in einem auf Polycarbonat basierenden Kunststoff eingebettete Endlosfasern. Dabei ist der auf Polycarbonat basierende Kunststoff vorzugsweise ein lineares Polycarbonat und die unidirektional ausgerichteten Endlosfasern weisen vorzugsweise ein E-Modul von größer 240 GPa auf. Praktische Versuche haben gezeigt, dass sich derartige Faserverbundwerkstofflagen besonders gut zu erfindungsgemäßen Mehrschichtverbundwerkstoffen mit ausgesprochen guten mechanischen Eigenschaften weiterverarbeiten lassen.

Weitere Einzelheiten und Vorteile der Erfindung ergeben sich aus der nachfolgenden Beschreibung der zugehörigen Zeichnung, die bevorzugte Ausführungsformen zeigt. In der Zeichnung zeigen:

Fig. 1 einen Mehrschichtverbundwerkstoff in schematischer und perspektivischer Darstellung aus drei übereinanderliegenden Lagen Faserverbundwerkstoff mit Ausschnittsvergrößerung, wobei die innenliegende Lage relativ zu den außenliegenden Lagen Faserverbundwerkstoff um 90° rotiert ist,

Fig. 2 einen Mehrschichtverbundwerkstoff in schematischer und perspektivischer Darstellung aus fünf übereinanderliegenden Lagen Faserverbundwerkstoff, wobei die innenliegenden Lagen gleich orientiert sind und ihre Orientierung relativ zu den außenliegenden Lagen Faserverbundwerkstoff um 90° rotiert sind,

Fig. 3a einen Mehrschichtverbundwerkstoff in schematischer und perspektivischer Darstellung aus sechs übereinanderliegenden Lagen Faserverbundwerkstoff, wobei die innenliegenden Lagen gleich orientiert sind und ihre Orientierung relativ zu den außenliegenden Lagen Faserverbundwerkstoff um 90° rotiert sind,

Fig. 3b: einen Mehrschichtverbundwerkstoff in schematischer und perspektivischer Darstellung aus drei übereinanderliegenden Lagen Faserverbundwerkstoff, wobei die innenliegende Lage eine höhere Dicke aufweist als die Summe der beiden außenliegenden Lagen. Das Dickenverhältnis der innenliegenden Lage zur Summe der beiden außenliegenden Lagen entspricht dabei dem Dickenverhältnis der Summe aller innenliegenden Lagen zur Summe der beiden außenliegenden Lagen des Mehrschichtverbundwerkstoffs aus Fig. 3a,

Fig. 4 einen Mehrschichtverbundwerkstoff in schematischer und perspektivischer Darstellung aus drei übereinanderliegenden Lagen Faserverbundwerkstoff, wobei die äußeren Lagen Faserverbundwerkstoff einen geringeren Faservolumengehalt als die inneren Lagen Faserverbundwerkstoff aufweisen,

Fig. 5a einen Mehrschichtverbundwerkstoff in schematischer und perspektivischer Darstellung aus drei übereinanderliegenden Lagen Faserverbundwerkstoff und einer zusätzlichen Materiallage auf einer außenliegenden Lage Faserverbundwerkstoff,

Fig. 5b einen Mehrschichtverbundwerkstoffs in schematischer und perspektivischer Darstellung aus drei übereinanderliegenden Lagen Faserverbundwerkstoff und zwei zusätzlichen innenliegenden weiteren Materiallagen, beispielsweise Kunststoffschichten, wobei sich jeweils eine innenliegende weitere Materiallage zwischen den außenliegenden Lagen Faserverbundwerkstoff und der innenliegenden Lage Faserverbundwerkstoff befindet, und

Fig. 6 einen Laptop in schematischer und perspektivischer Darstellung.

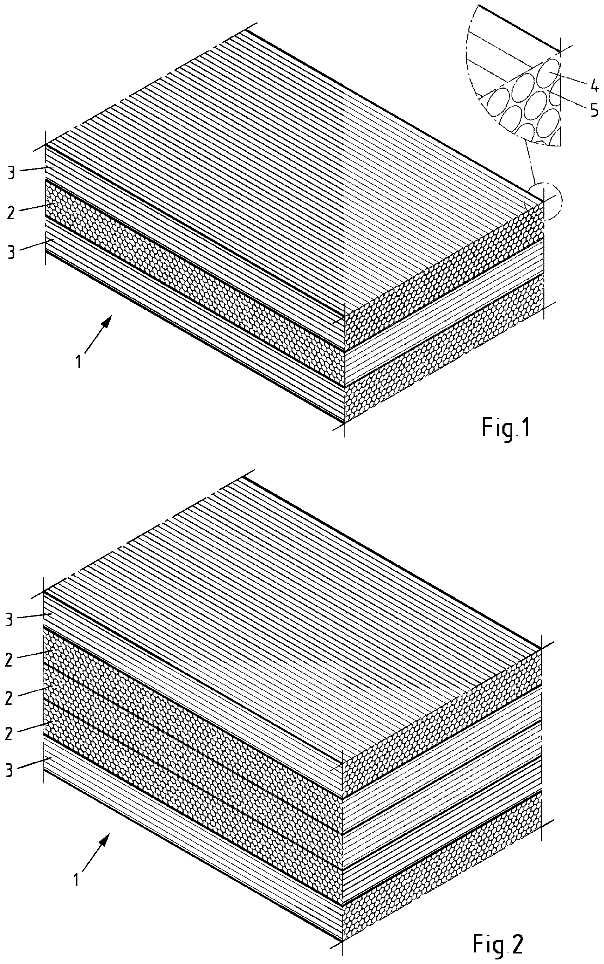

Figur 1 zeigt einen Ausschnitt eines Mehrschichtverbundwerkstoffs 1 aus drei übereinanderliegenden Lagen Faserverbundwerkstoff 2, 3, wobei die innenliegende Lage Faserverbundwerkstoff 2 relativ zu den außenliegenden Lagen 3 Faserverbundwerkstoff um 90° rotiert ist. Die Ausschnittsvergrößerung in Figur 1 zeigt, dass jede der Lagen 2, 3 des Mehrschichtverbundwerkstoffs Endlosfasern 4 enthält, die innerhalb der jeweiligen Lage unidirektional ausgerichtet sind und auf Polycarbonat basierenden Kunststoff 5 eingebettet sind. Die Orientierung der jeweiligen Lage Faserverbundwerkstoff 2,3 wird durch die Orientierung der darin enthaltenen unidirektional ausgerichteten Endlosfasern 4 bestimmt. Die Endlosfasern 4 erstrecken sich über die gesamte Länge bzw. Breite des Mehrschichtverbundwerkstoffs. Die Lagen 2, 3 sind vollflächig miteinander verbunden.

Der Mehrschichtverbundwerkstoff 1 gemäß Figur 2 besteht aus fünf übereinanderliegenden Lagen Faserverbundwerkstoff 2, 3, wobei die innenliegenden Lagen Faserverbundwerkstoff 2 gleich orientiert sind und ihre Orientierung relativ zu den außenliegenden Lagen Faserverbundwerkstoff 3 um 90° rotiert sind.

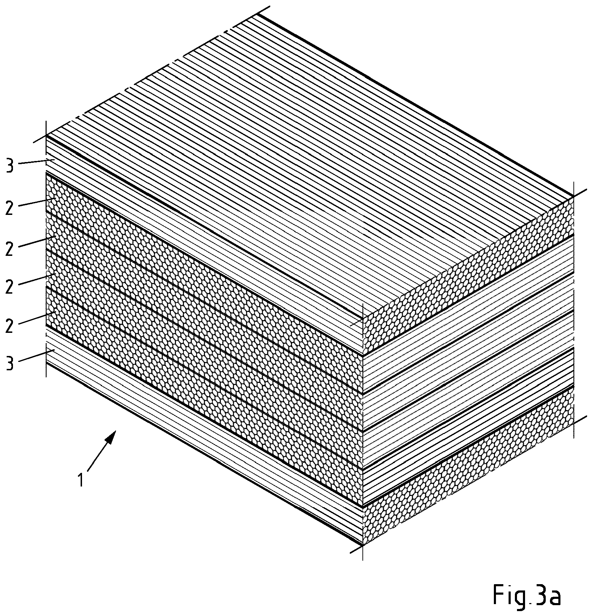

Der Mehrschichtverbundwerkstoff 1 gemäß Figur 3a besteht aus sechs übereinanderliegenden Lagen Faserverbundwerkstoff 2, 3, wobei die innenliegenden Lagen Faserverbundwerkstoff 2 gleich orientiert sind und ihre Orientierung relativ zu den außenliegenden Lagen Faserverbundwerkstoff 3 um 90° rotiert sind. Das Dickenverhältnis der Summe der beiden außenliegenden Lagen 3 zur Summe der innenliegenden Lagen 2 beträgt beispielsweise für eine Dicke jeder einzelnen der außenliegenden Lagen 3 und einer Dicke jeder einzelnen der innenliegenden Lagen 2 von 170 $\mu$m, (2-170 $\mu$m)/(4-170 $\mu$m) = 0,5.

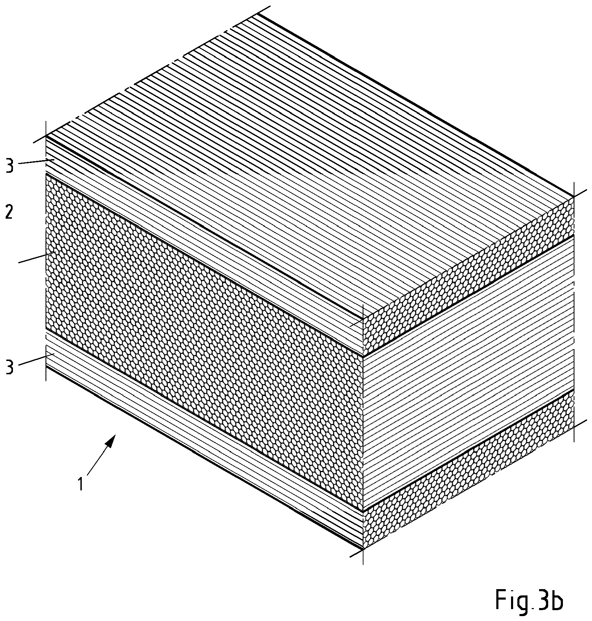

Figur 3b zeigt einen Mehrschichtverbundwerkstoff 1 aus drei übereinanderliegenden Lagen Faserverbundwerkstoff 2, 3, wobei die innenliegende Lage 2 eine höhere Dicke aufweist als die Summe der beiden außenliegenden Lagen 3. Das Dickenverhältnis der Summe der beiden außenliegenden Lagen 3 zur Summe der innenliegenden Lage 2 beträgt beispielsweise für eine Dicke jeder einzelnen der außenliegenden Lage 3 von 170 μm und einer Dicke der innenliegenden Lage 2 von 680 μm, (2-170 μm)/680 μm = 0,5. Das Dickenverhältnis der Summe der beiden außenliegenden Lagen 3 zur einen dicken innenliegenden Lage 2 gemäß Figur 3b entspricht damit dem Dickenverhältnis der Summe der beiden außenliegenden Lagen 3 zur Summe der vier innenliegenden Lagen 2 des Mehrschichtverbundwerkstoffs 1 aus Figur 3a.

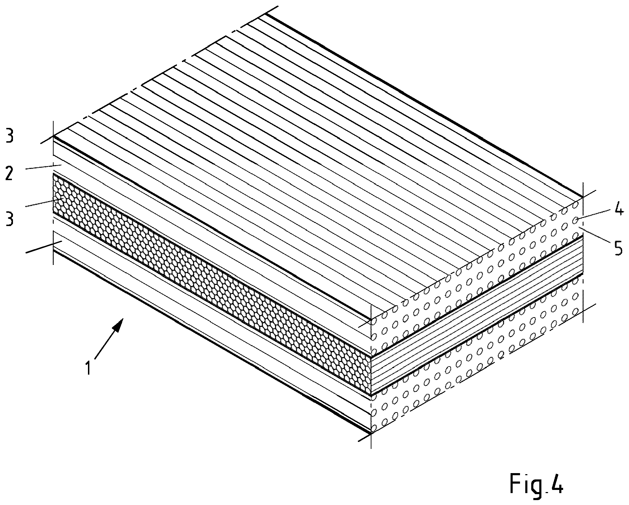

Der Mehrschichtverbundwerkstoff 1 gemäß Figur 4 besteht aus drei übereinanderliegenden Lagen Faserverbundwerkstoff 2, 3, wobei die äußeren Lagen Faserverbundwerkstoff 3 einen geringeren Faservolumengehalt als die inneren Lagen Faserverbundwerkstoff 2 aufweisen. Während in Figur 4 schematisch deutlich dargestellt ist, dass die Dichte der Endlosfasern 4 in den außenliegenden Lagen Faserverbundwerkstoff 3 im Vergleich zur Faserdichte in der innenliegenden Lage Faserverbundwerkstoff 2 geringer ist bzw. der Anteil des Kunststoffs 5 in den außenliegenden Lagen Faserverbundwerkstoff 3 entsprechend im Vergleich zum Anteil des Kunststoffs in den innenliegenden Faserverbundwerkstofflagen 2 höher ist, versteht es sich von selbst, dass auch bei den anderen vorangehenden und nachfolgenden Figuren die jeweils außenliegenden Faserverbundwerkstofflagen 3 erfindungsgemäß einen geringeren Faservolumengehalt aufweisen als die mindestens eine innenliegenden Lage Faserverbundwerkstoff 2.

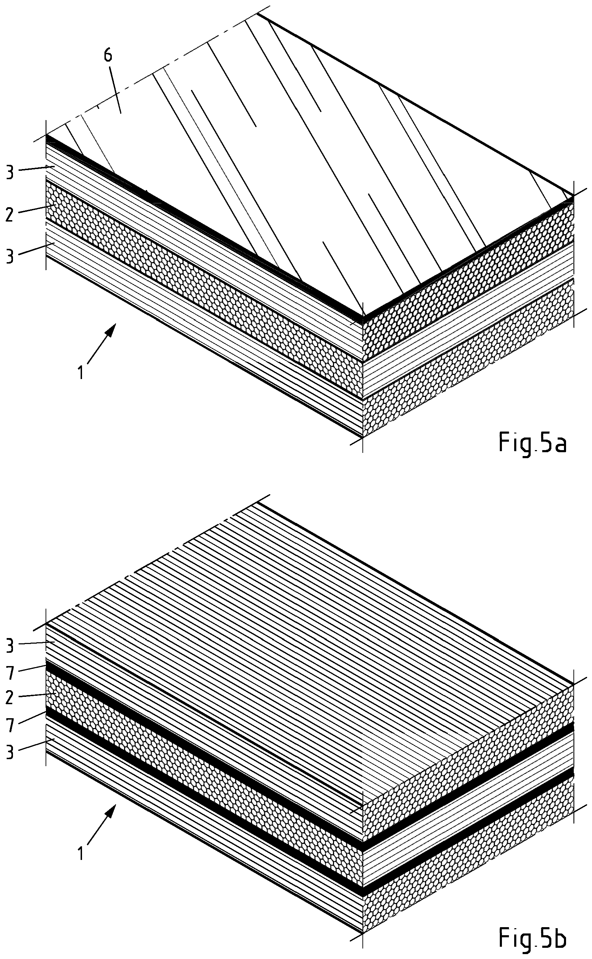

Figur 5a zeigt den Mehrschichtverbundwerkstoff 1 aus drei übereinanderliegenden Lagen Faserverbundwerkstoff 2, 3, wie für Figur 1 beschrieben, nur mit einer zusätzlichen weiteren außenliegenden Materiallage 6 auf einer der außenliegenden Lagen Faserverbundwerkstoff 3. Die außenliegende Materiallage 6 kann beispielsweise eine oder mehrere faserfreie Kunststofflagen und/oder eine dünne Verblendung, beispielsweise eine Lackschicht oder ein Furnier, umfassen.

Figur 5b zeigt einen Mehrschichtverbundwerkstoff 1 aus drei übereinanderliegenden Lagen Faserverbundwerkstoff 2, 3, wie für Figur 1 beschrieben, nur mit zwei zusätzlichen weiteren innenliegenden Materiallagen 7, wobei sich jeweils eine innenliegende weitere Materiallage 7 zwischen jeweils einer der außenliegenden Lagen 3 Faserverbundwerkstoff und der innenliegenden Lage 2 Faserverbundwerkstoff befindet. Die weiteren innenliegenden Materiallagen 7 können gleich oder unterschiedlich aufgebaut sein und beispielsweise eine oder mehrere faserfreie Kunststofflagen umfassen.

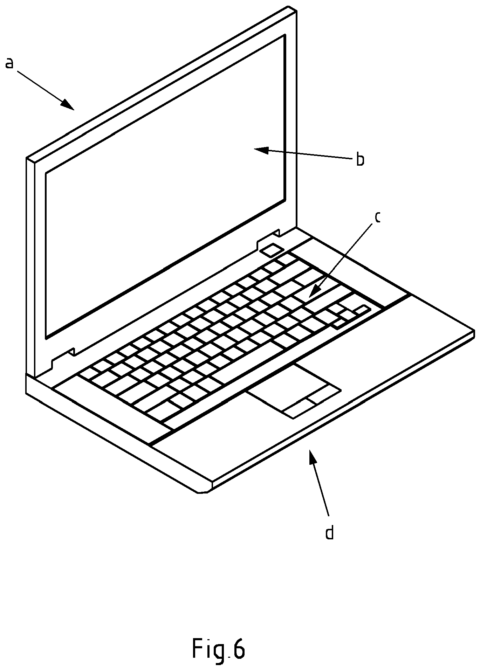

Figur 6 zeigt eine schematische Darstellung eines Laptops. Das Gehäuseteil des Laptops, welches die Monitorrückseite a des Monitors b bildet, wird in Fachkreisen auch als "a-cover" bezeichnet. Das Gehäuseteil des Laptops, welches die Unterseite d der Tastatur c bildet wird üblicherweise als "d-cover" bezeichnet. Die Monitorrückseite a und die Unterseite d des Laptops enthalten den erfindungsgemäßen Mehrschichtverbundwerkstoff.

**Bezugszeichenliste:**

1: Mehrschichtverbundwerkstoff
2: Innenliegende Lagen Faserverbundwerkstoff
3: Außenliegende Lagen Faserverbundwerkstoff
4: Endlosfaser
5: Auf Polycarbonat basierender Kunststoff
6: Weitere außenliegende Materiallage
7: Weitere innenliegende Materiallage
a: Monitorrückseite des Laptops
b: Monitor des Laptops
c: Tastatur des Laptops
d: Unterseite des Laptops

Die Erfindung wird nachfolgend anhand von Beispielen näher erläutert.

**Beispiele**

**1. Beschreibung der Rohstoffe und Prüfmethoden**

Komponente A

Lineares Polycarbonat auf Basis von Bisphenol A mit einer Schmelze-Volumenfließrate MVR von 6,0 cm$^3$/10 min (gemäß ISO 1133, bei einer Prüftemperatur 300°C und 1,2 kg Belastung).

Komponente B

Carbonfaser Pyrofil TRH50 60M der Firma Mitsubishi Rayon CO., LtD. mit einem Einzelfilamentdurchmesser von 7$\mu$m, einer Dichte von 1,81 g/cm$^3$ und einem Zugmodul von 250 GPa. Geliefert werden 60000 Einzelfilamente in einem Faserbündel (Roving) als Endlosspule.

**Messmethoden:**

Die nachstehend aufgeführten Methoden zur Bestimmung der entsprechenden Parameter wurden zur Durchführung bzw. Auswertung der Beispiele angewendet und sind auch die Methoden zur Bestimmung der erfindungsgemäß relevanten Parameter im Allgemeinen.

**Ermittlung des Faservolumengehalts**

In dem vorliegenden Prozess werden die Fasern mit einer konstanten Geschwindigkeit der Benetzung durch die Thermoplastschmelze geführt. Hierdurch errechnet sich der Faservolumengehalt einer Faserverbundwerkstofflage aus der Differenz des Schmelzevolumenstroms der Thermoplastschmelze und dem Produkt aus der Produktionsgeschwindigkeit der Faserverbundwerkstofflage sowie dem zu produzierenden Querschnitt der Faserverbundwerkstofflage.

**Bestimmung der Dicke und des Dickenverhältnisses**

Die Dickenbestimmung der Faserverbundwerkstofflagen sowie der nach dem Fügen resultierenden Mehrschichtverbundwerkstoffe erfolgte mit einer handelsüblichen Bügelmessschraube. Als Ergebnis wird der arithmetische Mittelwert von 5 Einzelmessungen an unterschiedlichen Positionen angegeben.

Das Dickenverhältnis der beiden außenliegenden Faserverbundwerkstofflagen zur Summe der innenliegenden Faserverbundwerkstofflagen kann zum einen im Zuge der Herstellung durch Bestimmung der Einzeldicken der Lagen Faserverbundwerkstoff vor dem Verbinden der Lagen zum Mehrschichtverbundwerkstoff erfolgen. Praktische Versuche haben gezeigt, dass sich bei den gängigen Verfahren zum Verbinden der Lagen (z.B. Laminieren unter Druck- und Wärmeeinwirkung) das Verhältnis der Dicken zueinander auch bei einer Kompression und damit Verringerung der Dicken insgesamt nicht wesentlich ändert. Die hier beschriebenen Dickenverhältnisse beziehen sich auf die im Zuge der Herstellung bestimmten Einzeldicken der Lagen Faserverbundwerkstoff vor dem Verbinden der Lagen zum Mehrschichtverbundwerkstoff.

Alternativ kann die Bestimmung des Dickenverhältnisses auch im fertigen Mehrschichtverbundwerkstoff erfolgen. Hierzu wird ein Querschnitt des Materials mikroskopisch untersucht. Aufgrund des Orientierungswechsels der Faserlaufrichtung beim Übergang von den innenliegenden zu den beiden außenliegen Lagen Faserverbundwerkstoff lassen sich diese Lagen im Mikroskop gut identifizieren. Für die Schichtdickenbestimmung wird als Schichtgrenze eine Ebene eingezogen, die parallel zu den durch die Faserlaufrichtung bestimmten Ebenen verläuft und auf der Hälfte des Abstandes von letzter zur außenliegenden Lage Faserverbundwerkstoff gehörenden Endlosfaser und erster zur innenliegenden Lage Faserverbundwerkstoff gehörenden Endlosfaser eingezogen wird.

**Hohlraumgehaltsbestimmung**

Die Ermittlung erfolgte mittels der Dickendifferenzmethode wie oben beschrieben an den Prüfmustern, welche zuvor mittels einer Intervallheizpresse gefügt wurden. Die Bestimmung der tatsächlichen Probendicke erfolgte an 5 Messpunkten, welche über das Bauteil verteilt waren. Für die Berechnung des Hohlraumgehalts wurde der arithmetische Mittelwert der 5 Einzelbestimmungen der tatsächlichen Probendicke verwendet.

**Ermittlung der Welligkeitskennzahlen**

Die Ermittlung der Welligkeitskennzahlen an Oberflächen erfolgte mit einem P16+ ™ der Firma KLA Tencor unter Verwendung der Steuerungssoftware Profiler 7.21 sowie der Auswertesoftware Apex 3D.

Die Differenzierung zwischen Rauheitsprofil und Welligkeitsprofil aus dem ermittelten Primärprofil erfolgte durch die Nutzung eines digitalen Gaußfilters nach DIN EN ISO 11562:1998 bei einer Grenzwellenlänge von 0,08mm.

Aus dem Welligkeitsprofil wurde die arithmetische Mittenwelligkeit (Wa), die quadratische Mittenwelligkeit (Wq) und die Gesamthöhe des Welligkeitsprofils auf der Berechnungslänge (Wt), wie in DIN EN ISO 4287:2010 definiert, berechnet.

Zur Ermittlung der Kennzahlen wurden ein Auflagegewicht des Messfühlers von 2mg sowie eine Vorschubge-

schwindigkeit des Messfühlers von 200μm/Sek gewählt. Die Messstrecke betrug jeweils 30mm. Die Berechnungslänge entsprach der Messstrecke.

Die nachfolgend angegeben Kennzahlen wurden aus 3 Einzelmessungen orthogonal zur Faserorientierung gemittelt. Die Messungen erfolgten bei Raumtemperatur (23°C).

**Biege-E- Modul**

Für die Bestimmung des Biege-E-Moduls werden aus den hergestellten Mehrschichtverbundwerkstoffplatten zunächst 5 Probekörper je Orientierung (0°, 90°) mit einer *Mutronic Diadisc 5200* unter Verwendung von *Dia Trennscheiben CFK fein* präpariert. Anschließend wird mithilfe einer Bügelmessschraube die für die Prüfungen relevanten, exakten Probenkörpermaße (Breite und Dicke) bestimmt. Die Durchführung der Prüfung erfolgt in Anlehnung an ASTM D790-10 Methode A. In dem resultierenden Kraft-Weg-Diagramm entspricht die Steigung dem Biege-E-Modul. Als Ergebnis wird der arithmetische Mittelwert der 5 Einzelmessungen angegeben.

**2. Herstellung und Ergebnisse**

**Herstellung der Faserverbundwerkstofflagen**

Die Herstellung der Faserverbundwerkstofflage aus den oben beschriebenen Komponenten A und B erfolgte nach dem in DE 10 2011 005 462 B3 beschriebenen Verfahren. Das Rohfaserband, welches aus gespreizten Rovings besteht, wurde auf eine Temperatur von ca. 220°C erhitzt, bevor der geschmolzene Kunststoff beidseitig auf die Rohfaserbandebene aufgetragen wurde. Nach erfolgter Druck-Scher-Vibrationsbeaufschlagung resultierten nachfolgende Zusammensetzungen der Faserverbundwerkstofflagen als Endlostape.

**Tabelle 1:** Übersicht über die Eigenschaften der einzelnen Verbundwerkstofflagen

| Verbundwerkstofflage | Gehalt an Komponente A (Kunststoff) in [Vol-%] | Gehalt an Komponente B (Endlosfasern in [Vol-%] | Schichtdicke in [μm] |
|---|---|---|---|
| 1 | 63 | 37 | 230 |
| 2 | 55 | 45 | 150 |
| 3 | 55 | 45 | 180 |
| 4 | 55 | 45 | 190 |
| 5 | 53 | 47 | 190 |
| 6 | 57 | 43 | 210 |
| 7 | 50 | 50 | 185 |
| 8 | 50 | 50 | 180 |

**Herstellung der Mehrschichtverbundwerkstoffe**

Durch gezielte Aneinanderreihung der Verbundwerkstofflagen in nachstehenden Orientierungen werden Mehrschichtverbundwerkstoff-Prüfmuster erhalten, welche zur weiteren Charakterisierung genutzt wurden.

**Tabelle 2:** Übersicht über Typ, Orientierung, Anzahl der verwendeten Verbundwerkstofflagen in den Mehrschichtverbundwerkstoffen

| Prüf muster | Innenlagen | | | | Außenlagen | | | |
|---|---|---|---|---|---|---|---|---|
| | Verbund-werkstofflage | Faservo-lumenge-halt [Vol.-%] | Orientierung | Ge-samtanzahl | Verbundwerkstofflage | Faservolumenge-halt [Vol.%] | Orientierung | Gesamtanzahl |
| A (vgl.) | 4 | 45 | 90° | 3 | 4 | 45 | 0° | 2 |
| B (vgl.) | 3 | 45 | 90° | 4 | 3 | 45 | 0° | 2 |
| C | 5 | 47 | 90° | 4 | 2 | 45 | 0° | 2 |
| D | 7 | 50 | 90° | 2 | 1 | 37 | 0° | 2 |
| E | 7 | 50 | 90° | 2 | 6 | 43 | 0° | 2 |
| F (vgl.) | 7 | 50 | 90° | 2 | 7 | 50 | 0° | 2 |
| G | 8 | 50 | 90° | 4 | 1 | 37 | 0° | 2 |
| H | 8 | 50 | 90° | 4 | 6 | 43 | 0° | 2 |
| I (vgl.) | 8 | 50 | 90° | 4 | 8 | 50 | 0° | 2 |

Die Prüfmuster wurden nach der Aneinanderreihung in einer Intervallheißpresse semikontinuierlich miteinander verbunden. Der flächig anliegende Pressdruck betrug hierbei 10 bar. Die Temperatur in der Heizzone lag bei 280°C und die Temperatur in der Kühlzone lag bei 100°C. Des Weiteren lag der Vorschub je Takt bei 30 mm und die Taktzeit bei 10 Sek. Die Dicken der einzelnen Tape-Muster blieben nach dem Fügen zu einem Prüfmuster in diesem erhalten.

Bei den erfindungsgemäßen Mehrschichtverbundwerkstoff-Mustern, die in der außenliegenden Faserverbundwerkstofflage einen geringeren Faservolumengehalt als in der mindestens einen innenliegenden Faserverbundwerkstofflage aufweisen, ließen sich bei optischer Überprüfung keine Störstellen an der Oberfläche erkennen. Die Oberfläche dieser erfindungsgemäßen Mehrschichtverbundwerkstoffe war noch besser als die Oberfläche der Mehrschichtverbundwerkstoffe, die in den innen- und außenliegenden Faserverbundwerkstofflagen denselben Faservolumengehalt aufweisen. Insbesondere ließen sich bei den erfindungsgemäßen Mehrschichtverbundwerkstoffe keine aus der Oberfläche herausragenden trockenen Endlosfasern feststellen.

**Ergebnisse der Welligkeitsprofilmessung**

Tabelle 3: Kennzahlen von Mehrschichtverbundwerkstoffen mit unterschiedlichem Lagenaufbau

| Prüfmuster | Lagenanzahl | Wa [in $\mu$m] | Wq [in $\mu$m] | Wt [in $\mu$m] | Dicken verhältnis ($\sum$ außenliegende Lagen/ $\sum$ innenliegende Lagen) |
|---|---|---|---|---|---|
| D (vgl.*) | 4 | 8,58 | 10,58 | 60,10 | 1,24 |
| F (vgl.*) | 4 | 9,35 | 11,81 | 65,27 | 1,0 |
| G | 6 | 7,31 | 9,05 | 52,90 | 0,64 |
| H | 6 | 6,89 | 8,70 | 54,97 | 0,58 |

Der Welligkeitsprofilmessung ist zu entnehmen, dass die Oberflächengüte der erfindungsgemäßen Mehrschichtverbundwerkstoffe nochmals verbessert werden kann, wenn der Mehrschichtverbundwerkstoff ein bestimmtes Dickenverhältnis der Summe der beiden außenliegenden Faserverbundwerkstofflagen zu der Summe aller innenliegenden Lagen Faserverbundwerkstoff zwischen 0,3 bis 0,65 aufweist. Dies ist für die erfindungsgemäßen Mehrschichtverbundwerkstoffe G und H der Fall, während die erfindungsgemäßen Mehrschichtverbundwerkstoffe D und F dieses zusätzliche Kriterium nicht erfüllen. Aus diesem Grund sind die Mehrschichtverbundwerkstoffe D und F hier als Vergleichsbeispiele (vgl.*) gekennzeichnet.

**Ergebnisse der Biege-E-Modul Ermittlung und der Bestimmung des Hohlraumgehalts**

Tabelle 4: Biege E-Module in 0° und 90° Orientierung von Mehrschichtverbundwerkstoffen mit unterschiedlichem Lagenaufbau

| Prüfmuster | Biege-E-Modul in 90° Orientierung in [GPa] | rung in [GPa] Biege-E-Modul in 0° Orientierung in [GPa] | Prüfmusterdicke in [$\mu$m] | Hohlraumgehalt in [%] | Dickenverhältnis ($\sum$ außenliegende Lagen/ $\sum$ innenliegende Lagen) |
|---|---|---|---|---|---|
| A (vgl.) | 11,4 | 77,9 | 950 | < 0,5 | 0,66 |
| B (vgl.) | 30,2 | 64,5 | 1080 | < 0,5 | 0,5 |
| C | 37,5 | 55,9 | 1060 | < 0,5 | 0,39 |
| D (vgl.*) | 12,3 | 71,9 | 830 | < 0,5 | 1,24 |
| E (vgl.*) | 14,1 | 80,9 | 790 | < 0,5 | 1,14 |
| F (vgl.) | 15,3 | 97,2 | 740 | < 0,5 | 1,0 |
| G | 28,1 | 66,9 | 1280 | < 0,5 | 0,63 |
| H | 28,0 | 72,3 | 1200 | < 0,5 | 0,58 |

(fortgesetzt)

| Prüfmuster | Biege-E-Modul in 90° Orientierung in [GPa] | rung in [GPa] Biege-E-Modul in 0° Orientierung in [GPa] | Prüfmusterdicke in [$\mu$m] | Hohlraumgehalt in [%] | Dickenverhältnis ($\sum$ außenliegende Lagen/ $\sum$ innenliegende Lagen) |
|---|---|---|---|---|---|
| I (vgl.) | 32,4 | 75,8 | 1080 | < 0,5 | 0,5 |

Die Ergebnisse der Biege E-Modul Ermittlung zeigen, dass die erfindungsgemäßen Mehrschichtverbundwerkstoffe C, G und H sowohl in 90°-Orientierung als auch in 0°-Orientierung ein ausreichend hohes Biege E-Modul aufweisen. Die nicht erfindungsgemäßen Mehrschichtverbundwerkstoffe I und B weisen vergleichbare E-Module auf, haben aber eine schlechtere Oberflächenbeschaffenheit als die erfindungsgemäßen Mehrschichtverbundwerkstoffe. Es hat sich überraschenderweise neben den nochmals verbesserten Oberflächeneigenschaften als für die mechanischen Eigenschaften besonders vorteilhaft erwiesen, wenn der erfindungsgemäße Mehrschichtverbundwerkstoff neben dem geringeren Faservolumengehalt in den außenliegenden Faserverbundwerkstofflagen zusätzlich ein Dickenverhältnis der Summe der beiden außenliegenden Faserverbundwerkstofflagen zu der Summe aller innenliegenden Lagen Faserverbundwerkstoff zwischen 0,3 bis 0,65 aufweist. Dies gewährleistet, dass die erfindungsgemäßen Proben einer multiaxialen Belastung, wie etwa dem Herunterfallen des entsprechenden Bauteils oder einer ungewollten flächigen Belastung, standhalten. Des Weiteren ist ersichtlich, dass der Gehalt an Hohlräumen durch den Herstellungsprozess minimiert wird und für alle untersuchten Proben unterhalb von 0,5 liegt.

**Patentansprüche**

1. Mehrschichtverbundwerkstoff (1), umfassend mindestens drei übereinander liegende und miteinander flächig verbundene Lagen Faserverbundwerkstoff, die relativ zueinander definiert werden als zwei außenliegende Lagen Faserverbundwerkstoff (3) und mindestens eine innenliegende Lage Faserverbundwerkstoff (2), wobei

   (a) jede dieser mindestens drei Lagen Faserverbundwerkstoff (2, 3), Endlosfasern (4) enthält, wobei

   - die Endlosfasern (4) innerhalb der jeweiligen Lage (2, 3) unidirektional ausgerichtet sind und
   - in einem auf Polycarbonat basierenden Kunststoff (5) eingebettet sind, wobei das Polycarbonat ausgewählt ist aus Homopolycarbonat oder Copolycarbonat,

   (b) die innenliegenden Lagen Faserverbundwerkstoff (2) im Wesentlichen gleich orientiert sind und ihre Orientierung relativ zu den außenliegenden Lagen Faserverbundwerkstoff (3) um 30° bis 90° rotiert ist, wobei die Orientierung einer Lage Faserverbundwerkstoff (2, 3) durch die Orientierung der darin enthaltenen, unidirektional ausgerichteten Endlosfasern (4) bestimmt wird
   und
   (c) wobei die außenliegenden Lagen Faserverbundwerkstoff (3) einen geringeren Volumengehalt an Fasern, bezogen auf das Gesamtvolumen der Lage Faserverbundwerkstoff, aufweisen als die mindestens eine innenliegende Lage Faserverbundwerkstoff (2).

2. Mehrschichtverbundwerkstoff nach Anspruch 1 oder 2, **dadurch gekennzeichnet, dass** das Dickenverhältnis der Summe der beiden außenliegenden Lagen (3) zu der Summe aller innenliegenden Lagen Faserverbundwerkstoff (2) 0,3 bis 0,65 beträgt.

3. Mehrschichtverbundwerkstoff (1) gemäß Anspruch 1 oder 2, wobei die Faserverbundwerkstofflagen (2, 3) erhältlich sind durch Auftragen eines geschmolzenen, auf Polycarbonat basierenden Kunststoffs auf ein über die Glasübergangstemperatur des Kunststoffs vorgeheiztes Roh-Faserband, wobei das Auftragen unter Druck-Scher-Vibrationsbeaufschlagung erfolgt und wobei das Polycarbonat ausgewählt ist aus Homopolycarbonat oder Copolycarbonat.

4. Mehrschichtverbundwerkstoff (1) gemäß einem der Ansprüche 1 bis 3, wobei der Faservolumengehalt der außenliegenden Lagen Faserverbundwerkstoff (3) höchstens 50 Vol.%, bezogen auf das Volumen der außenliegenden Lagen Faserverbundwerkstoff (3), beträgt.

5. Mehrschichtverbundwerkstoff (1) gemäß einem der Ansprüche 1 bis 4, wobei die mindestens drei Lagen Faserverbundwerkstoff (2, 3) im Wesentlichen symmetrisch angeordnet sind, wobei die beiden außenliegenden Lagen Faserverbundwerkstoff (3) in Bezug auf wenigstens ein Merkmal aus der Gruppe chemische Zusammensetzung, Faservolumengehalt und Schichtdicke im Wesentlichen gleich aufgebaut sind.

**6.** Mehrschichtverbundwerkstoff (1) gemäß einem der Ansprüche 1 bis 5, wobei der Mehrschichtverbundwerkstoff (1) eine Gesamtdicke von 0,5 bis 2 mm aufweist.

**7.** Mehrschichtverbundwerkstoff (1) gemäß einem der Ansprüche 1 bis 6, wobei das Dickenverhältnis der Summe der beiden außenliegenden Lagen (3) zu der Summe aller innenliegenden Lagen Faserverbundwerkstoff (2) 0,38 bis 0,55; insbesondere 0,42 bis 0,48 beträgt.

**8.** Mehrschichtverbundwerkstoff (1) gemäß einem der Ansprüche 1 bis 7, wobei der Mehrschichtverbundwerkstoff (1) drei bis sechs innenliegende Faserverbundwerkstofflagen (2) umfasst.

**9.** Mehrschichtverbundwerkstoff (1) gemäß einem der Ansprüche 1 bis 8, wobei die innenliegenden Lagen Faserverbundwerkstoff (2) gleich orientiert sind und ihre Orientierung relativ zu den außenliegenden Lagen Faserverbundwerkstoff (3) um 90°±5° rotiert ist.

**10.** Mehrschichtverbundwerkstoff (1) gemäß einem der Ansprüche 1 bis 9, wobei die mindestens drei Lagen Faserverbundwerkstoff (2, 3) im Wesentlichen keine Hohlräume, insbesondere im Wesentlichen keine Lufteinschlüsse, aufweisen.

**11.** Mehrschichtverbundwerkstoff (1) gemäß einem der Ansprüche 1 bis 10,wobei die Endlosfasern (4) ausgewählt sind aus der Gruppe bestehend aus Glasfasern, Carbonfasern, Basaltfasern, Aramidfasern, Liquid-crystal-Polymer-Fasern, Polyphenylensulfid-Fasern, Polyetherketon-Fasern, Polyetheretherketon-Fasern, Polyetherimid-Fasern und deren Mischungen, insbesondere Carbonfasern.

**12.** Verfahren zur Herstellung eines Mehrschichtverbundwerkstoffs (1) gemäß einem der Ansprüche 1 bis 11, umfassend folgende Schritte:

- Bereitstellen mindestens einer innenliegender Lage Faserverbundwerkstoff (2) und zweier außenliegender Lagen Faserverbundwerkstoff (3), wobei die Herstellung der einzelnen Faserverbundwerkstofflagen durch Auftragen eines geschmolzenen auf Polycarbonat basierenden Kunststoffs auf ein über die Glasübergangstemperatur des Kunststoffs vorgeheiztes Roh-Faserband, wobei das Auftragen unter Druck-Scher-Vibrationsbeaufschlagung erfolgt und wobei das Polycarbonat ausgewählt ist aus Homopolycarbonat oder Copolycarbonat,
- Einlegen der mindestens einen innenliegenden Lage Faserverbundwerkstoff (2) zwischen die außenliegenden Faserverbundwerkstofflagen (3), wobei die innenliegenden Lagen Faserverbundwerkstoff (2) gleich orientiert sind und ihre Orientierung relativ zu den außenliegenden Lagen Faserverbundwerkstoff (3) um 30° bis 90° rotiert ist,
- Verbinden der geschichteten Lagen Faserverbundwerkstoff (2, 3), insbesondere mittels Druck und Temperatur, zum Mehrschichtverbundwerkstoff (1).

**13.** Elektronisches Gerät oder Gehäuseteil, welches geeignet ist für die Verwendung oder den Einsatz in einem Gehäuse eines elektronischen Geräts, wobei das elektronische Gerät oder Gehäuseteil einen Mehrschichtverbundwerkstoff (1) gemäß einem der Ansprüche 1 bis 11 enthält.

**14.** Elektronisches Gerät gemäß Anspruch 13, wobei das elektronische Gerät ein Monitor, Tablet, Mobiltelefon oder ein Computer, vorzugsweise ein Laptop ist.

**15.** Gehäuseteil gemäß Anspruch 13, wobei das Gehäuse eines elektronischen Geräts die Monitorrückseite (a) oder die Unterseite (d) eines Laptops darstellt.

**Claims**

**1.** Multilayer composite (1), comprising at least three superimposed and face-to-face joined plies of fibre composite which are defined relative to one another as two outer plies of fibre composite (3) and at least one inner ply of fibre composite (2), wherein

(a) each of these at least three plies of fibre composite (2, 3) comprises endless fibres (4), wherein

- the endless fibres (4) within the respective ply (2, 3) are unidirectionally aligned and
- are embedded in a polycarbonate-based plastic (5), wherein the polycarbonate is selected from homopolycarbonate or copolycarbonate,

(b) the inner plies of fibre composite (2) have substantially the same orientation and their orientation relative to the outer plies of fibre composite (3) is rotated by 30° to 90°, wherein the orientation of a ply of fibre composite (2, 3) is determined by the orientation of the unidirectionally aligned endless fibres (4) present therein and

(c) wherein the outer plies of fibre composite (3) have a lower volume content of fibres based on the total volume of the ply of fibre composite than the at least one inner ply of fibre composite (2).

2.  Multilayer composite according to Claim 1 or 2, **characterized in that** the thickness ratio of the sum of the two outer plies (3) to the sum of all inner plies of fibre composite (2) is 0.3 to 0.65.

3.  Multilayer composite (1) according to Claim 1 or 2, wherein the fibre composite plies (2, 3) are obtainable by applying a molten polycarbonate-based plastic onto a raw fibre web preheated to above the glass transition temperature of the plastic, wherein the applying is effected under application of pressure-shear vibration and wherein the polycarbonate is selected from homopolycarbonate or copolycarbonate.

4.  Multilayer composite (1) according to any of Claims 1 to 3, wherein the fibre volume content of the outer plies of fibre composite (3) is not more than 50 vol% based on the volume of the outer plies of fibre composite (3).

5.  Multilayer composite (1) according to any of Claims 1 to 4, wherein the at least three plies of fibre composite (2, 3) are arranged in substantially symmetrical fashion, wherein the two outer plies of fibre composite (3) have a substantially identical construction in terms of at least one feature from the group comprising chemical composition, fibre volume content and layer thickness.

6.  Multilayer composite (1) according to any of Claims 1 to 5, wherein the multilayer composite (1) has a total thickness in the range from 0.5 mm to 2 mm.

7.  Multilayer composite (1) according to any of Claims 1 to 6, wherein the thickness ratio of the sum of the two outer plies (3) to the sum of all inner plies of fibre composite (2) is 0.38 to 0.55, in particular 0.42 to 0.48.

8.  Multilayer composite (1) according to any of Claims 1 to 7, wherein the multilayer composite (1) comprises three to six inner fibre composite plies (2).

9.  Multilayer composite (1) according to any of Claims 1 to 8, wherein the inner plies of fibre composite (2) have the same orientation and their orientation relative to the outer plies of fibre composite (3) is rotated by 90°±5°.

10. Multilayer composite (1) according to any of Claims 1 to 9, wherein the at least three plies of fibre composite (2, 3) comprise essentially no voids, in particular essentially no air inclusions.

11. Multilayer composite (1) according to any of Claims 1 to 10, wherein the endless fibres (4) are selected from the group comprising glass fibres, carbon fibres, basalt fibres, aramid fibres, liquid crystal polymer fibres, polyphenylene sulphide fibres, polyether ketone fibres, polyether ether ketone fibres, polyether imide fibres and mixtures thereof, in particular carbon fibres.

12. Process for producing a multilayer composite (1) according to any of Claims 1 to 11, comprising the steps of

- providing at least one inner ply of fibre composite (2) and two outer plies of fibre composite (3), wherein the production of the individual fibre composite plies is effected by applying a molten polycarbonate-based plastic onto a raw fibre web preheated to above the glass transition temperature of the plastic, wherein the applying is effected under application of pressure-shear vibration and wherein the polycarbonate is selected from homopolycarbonate or copolycarbonate,
- introducing the at least one inner ply of fibre composite (2) between the outer fibre composite plies (3), wherein the inner plies of fibre composite (2) have the same orientation and their orientation relative to the outer plies of fibre composite (3) is rotated by 30° to 90°,
- joining the layered plies of fibre composite (2, 3), in particular by means of pressure and temperature, to afford the multilayer composite (1).

13. Electronic device or housing part suitable for use or employment in a housing of an electronic device, wherein the electronic device or housing part comprises a multilayer composite (1) according to any of Claims 1 to 11.

14. Electronic device according to Claim 13, wherein the electronic device is a monitor, tablet, mobile telephone or a computer, preferably a laptop.

15. Housing part according to Claim 13, wherein the housing of an electronic device is the monitor backside (a) or the underside (d) of a laptop.

**Revendications**

1. Matériau composite multicouche (1), comprenant au moins trois couches superposées et reliées les unes avec les autres par la surface d'un matériau composite fibreux, qui sont définies les unes par rapport aux autres comme deux couches extérieures d'un matériau composite fibreux (3) et au moins une couche intérieure d'un matériau composite fibreux (2),

(a) chacune desdites au moins trois couches de matériau composite fibreux (2, 3) contenant des fibres filaments (4),

- les fibres filaments (4) étant alignées unidirectionnellement à l'intérieur de chaque couche (2, 3), et
- étant incorporées dans une matière plastique à base de polycarbonate (5), le polycarbonate étant choisi parmi un homopolycarbonate ou un copolycarbonate,

(b) les couches intérieures de matériau composite fibreux (2) étant essentiellement orientées de manière identique, et leur orientation étant tournée de 30° à 90° par rapport aux couches extérieures de matériau composite fibreux (3), l'orientation d'une couche de matériau composite fibreux (2, 3) étant déterminée par l'orientation des fibres filaments (4) alignées unidirectionnellement contenues dans celle-ci,
et
(c) les couches extérieures de matériau composite fibreux (3) présentant une teneur volumique en fibres plus petite, par rapport au volume total de la couche de matériau composite fibreux, que ladite au moins une couche intérieure de matériau composite fibreux (2).

2. Matériau composite multicouche selon la revendication 1 ou 2, **caractérisé en ce que** le rapport d'épaisseur entre la somme des deux couches extérieures (3) et la somme de toutes les couches intérieures de matériau composite fibreux (2) est de 0,3 à 0,65.

3. Matériau composite multicouche 91)a selon la revendication 1 ou 2, **caractérisé en ce que** les couches de matériau composite fibreux (2, 3) peuvent être obtenues par application d'une matière plastique à base de polycarbonate fondue sur une bande fibreuse brute préchauffée à une température supérieure à la température de transition vitreuse de la matière plastique, l'application ayant lieu avec exposition à une pression, un cisaillement et une vibration, et le polycarbonate étant choisi parmi un homopolycarbonate ou un copolycarbonate.

4. Matériau composite multicouche (1) selon l'une quelconque des revendications 1 à 3, dans lequel la teneur volumique en fibres des couches extérieures de matériau composite fibreux (3) est d'au plus 50 % en volume, par rapport au volume des couches extérieures de matériau composite fibreux (3).

5. Matériau composite multicouche (1) selon l'une quelconque des revendications 1 à 4, dans lequel lesdites au moins trois couches de matériau composite fibreux (2, 3) sont agencées essentiellement symétriquement, les deux couches extérieures de matériau composite fibreux (3) étant configurées de manière essentiellement identique au regard d'au moins une caractéristique du groupe constitué par la composition chimique, la teneur volumique en fibres et l'épaisseur de couche.

6. Matériau composite multicouche (1) selon l'une quelconque des revendications 1 à 5, dans lequel le matériau composite multicouche (1) présente une épaisseur totale de 0,5 à 2 mm.

7. Matériau composite multicouche (1) selon l'une quelconque des revendications 1 à 6, dans lequel le rapport d'épaisseur entre la somme des deux couches extérieures (3) et la somme de toutes les couches intérieures de matériau composite fibreux (2) est de 0,35 à 0,55, notamment de 0,42 à 0,48.

8. Matériau composite multicouche (1) selon l'une quelconque des revendications 1 à 7, dans lequel le matériau composite multicouche (1) comprend trois à six couches de matériau composite fibreux intérieures (2).

9. Matériau composite multicouche (1) selon l'une quelconque des revendications 1 à 8, dans lequel les couches intérieures de matériau composite fibreux (2) sont orientées de manière identique, et leur orientation est tournée de 90° ± 5° par rapport aux couches extérieures de matériau composite fibreux (3).

10. Matériau composite multicouche (1) selon l'une quelconque des revendications 1 à 9, dans lequel lesdites au moins trois couches de matériau composite fibreux (2, 3) ne comprennent essentiellement pas de cavités, notamment essentiellement pas d'inclusions d'air.

11. Matériau composite multicouche (1) selon l'une quelconque des revendications 1 à 10, dans lequel les fibres filaments (4) sont choisies dans le groupe constitué par les fibres de verre, les fibres de carbone, les fibres de basalte, les fibres d'aramide, les fibres de polymère cristallin liquide, les fibres de polysulfure de phénylène, les fibres de polyéthercétone, les fibres de polyéther-éther-cétone, les fibres de polyéther-imide et leurs mélanges, notamment les fibres de carbone.

12. Procédé de fabrication d'un matériau composite multicouche (1) selon l'une quelconque des revendications 1 à 11, comprenant les étapes suivantes :

- la préparation d'au moins une couche intérieure de matériau composite fibreux (2) et de deux couches extérieures de matériau composite fibreux (3), la fabrication des couches de matériau composite fibreux individuelles ayant lieu par application d'une matière plastique à base de polycarbonate fondue sur une bande fibreuse brute préchauffée à une température supérieure à la température de transition vitreuse de la matière plastique, l'application ayant lieu avec exposition à une pression, un cisaillement et une vibration, et le polycarbonate étant choisi parmi un homopolycarbonate ou un copolycarbonate,
- l'insertion de ladite au moins une couche intérieure de matériau composite fibreux (2) entre les couches de matériau composite fibreux extérieures (3), les couches intérieures de matériau composite fibreux (2) étant orientées de manière identique, et leur orientation étant tournée de 30° à 90° par rapport aux couches extérieures de matériau composite fibreux (3),
- la liaison des couches stratifiées de matériau composite fibreux (2, 3), notamment au moyen d'une pression et d'une température, pour former le matériau composite multicouche (1).

13. Appareil électronique ou partie de boîtier, qui est appropriée pour l'utilisation en tant que ou l'insertion dans un boîtier d'un appareil électronique, l'appareil électronique ou la partie de boîtier contenant un matériau composite multicouche (1) selon l'une quelconque des revendications 1 à 11.

14. Appareil électronique selon la revendication 13, dans lequel l'appareil électronique est un écran, une tablette, un téléphone portable ou un ordinateur, de préférence un ordinateur portable.

15. Partie de boîtier selon la revendication 13, dans laquelle le boîtier d'un appareil électronique est le côté arrière d'un écran (a) ou le côté inférieur (d) d'un ordinateur portable.

Fig.1

Fig.2

Fig.3a

Fig.3b

Fig.4

3

2

3

1

Fig.5a

3

7

2

7

3

1

Fig.5b

Fig.6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2014014813 A1
- WO 2013098224 A1
- DE 102012200059 A1
- US 3028635 A
- US 2999825 A
- US 3148172 A
- US 2991273 A
- US 3271367 A
- US 4982014 A
- US 2999846 A
- DE 1570703 A
- DE 2063050 A
- DE 2036052 A
- DE 2211956 A
- DE 3832396 A
- FR 1561518 A
- JP 620391986 A
- JP 620401986 A
- JP 1055501986 A
- US 3419634 A
- US PS3189662 A
- EP 0122535 A
- US 5227449 A
- DE 3334782 A
- EP 0839623 A
- WO 9615102 A
- EP 0500496 A
- DE 102011005462 B3

**In der Beschreibung aufgeführte Nicht-Patentliteratur**

- **SCHNELL.** Chemistry and Physics of Polycarbonates, Polymer Reviews. Interscience Publishers, 1964, vol. 9
- **D. FREITAG ; U. GRIGO ; P.R. MÜLLER ; H. NOUVERTNE ; BAYER AG.** Polycarbonates in Encyclopedia of Polymer Science and Engineering. 1988, vol. 11, 648-718
- **U. GRIGO ; K. KIRCHNER ; P.R. MÜLLER.** Polycarbonate in BeckerBraun, Kunststoff-Handbuch, Band 31, Polycarbonate, Polyacetale, Polyester, Celluloseester. Carl Hanser Verlag, 1992, vol. 31, 117-299
- Monographie. **H. SCHNELL.** Chemistry and Physics of Polycarbonates. Interscience Publishers, 1964
- **HANS ZWEIFEL.** Plastics Additives Handbook. Hanser Verlag, 2000